(19) Europäisches Patentamt
European Patent Office
Office européen des brevets

(11) **EP 3 917 259 A1**

(12) **EUROPEAN PATENT APPLICATION**

(43) Date of publication:
**01.12.2021 Bulletin 2021/48**

(51) Int Cl.:
***H04W 72/12*** *(2009.01)* ***H04W 28/02*** *(2009.01)*

(21) Application number: **21172183.2**

(22) Date of filing: **05.05.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.05.2020 US 202063025473 P**

(71) Applicant: **Nokia Technologies Oy**
**02610 Espoo (FI)**

(72) Inventors:
- **Wigard, Jeroen**
  **9270 Klarup (DK)**
- **Lauridsen, Mads**
  **9260 Gistrup (DK)**
- **Andrés Maldonado, Pilar**
  **9000 Aalborg (DK)**

(74) Representative: **Nokia EPO representatives**
**Nokia Technologies Oy**
**Karakaari 7**
**02610 Espoo (FI)**

# (54) DATA TRANSMISSION COORDINATION BETWEEN CELLS

(57) Systems, methods, apparatuses, and computer program products for data transmission coordination between cells. For example, certain embodiments may provide for continuing the data transmission after a transmission disruption due to the cell mobility in NTN deployments (e.g., enabling coordination of long narrowband Internet of Things (NB-IoT) transmissions in time between non-terrestrial networks (NTN) cells instead of initiating a new transmission from the beginning of the data after cell reselection). In this way, certain embodiments described herein may facilitate continuation of a data transfer at one cell based on a transmission disruption between another cell and a user equipment (UE).

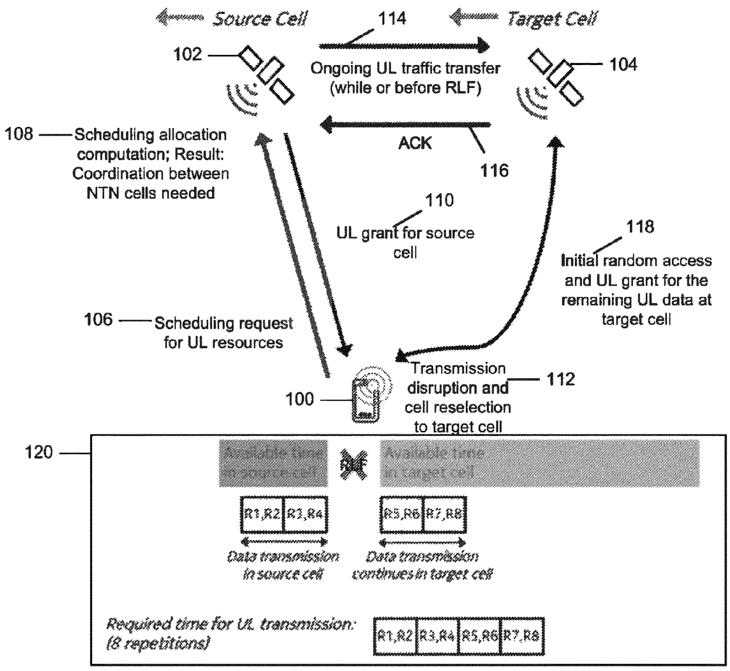


**Fig. 1a**

EP 3 917 259 A1

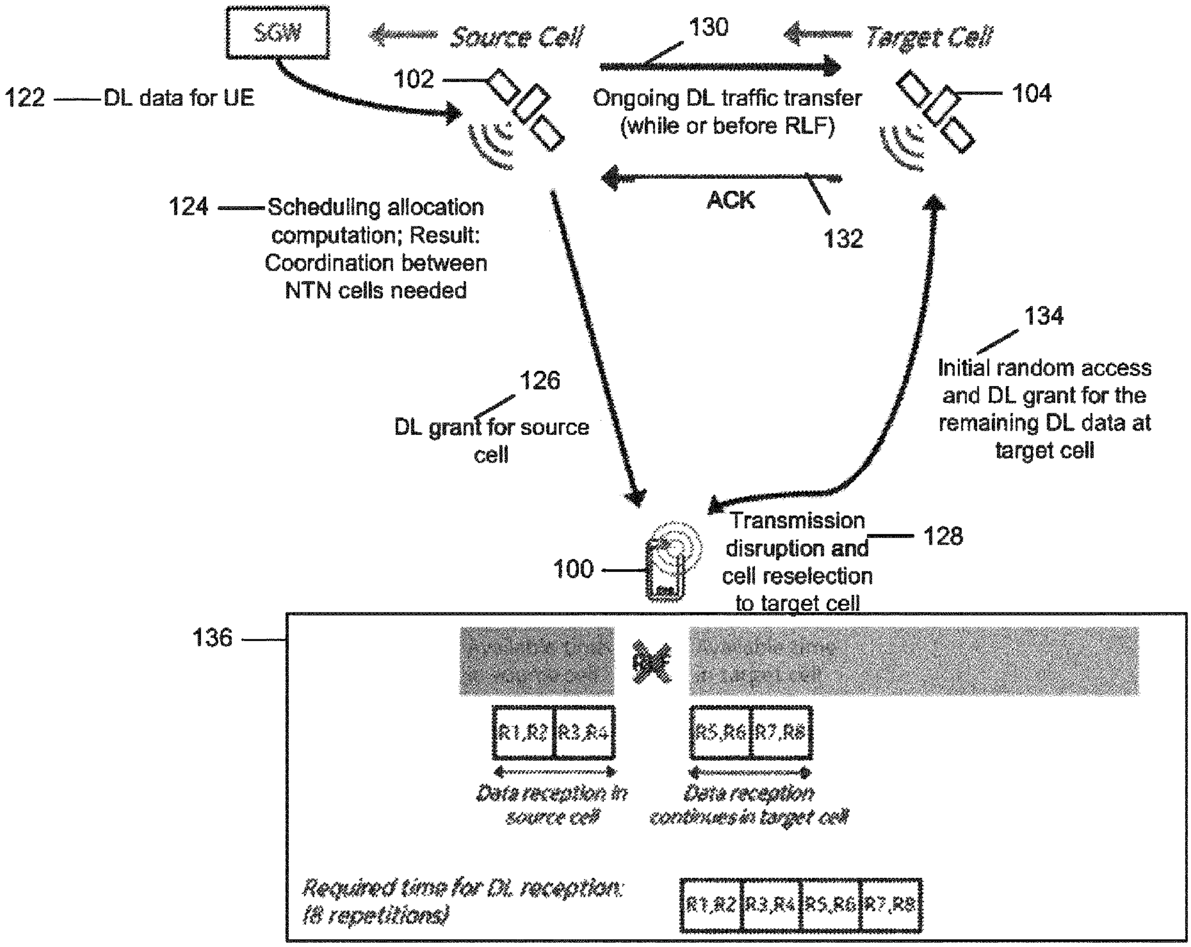
SGW
Source Cell
Target Cell
130
102
104
122
DL data for UE
Ongoing DL traffic transfer (while or before RLF)
ACK
132
124
Scheduling allocation computation; Result: Coordination between NTN cells needed
134
Initial random access and DL grant for the remaining DL data at target cell
126
DL grant for source cell
Transmission disruption and cell reselection to target cell
128
100
136
R1,R2
R3,R4
R5,R6
R7,R8
Data reception in source cell
Data reception continues in target cell
Required time for DL reception: (8 repetitions)
R1,R2
R3,R4
R5,R6
R7,R8

Fig. 1b

## Description

FIELD:

Some example embodiments may generally relate to mobile or wireless telecommunication systems, such as Long Term Evolution (LTE) or fifth generation (5G) radio access technology or new radio (NR) access technology, or other communications systems. For example, certain embodiments may relate to systems and/or methods for data transmission coordination between cells.

BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. 5G wireless systems refer to the next generation (NG) of radio systems and network architecture. 5G is mostly built on a new radio (NR), but a 5G (or NG) network can also build on E-UTRA radio. It is estimated that NR may provide bitrates on the order of 10-20 Gbit/s or higher, and may support at least enhanced mobile broadband (eMBB) and ultra-reliable low-latency-communication (URLLC) as well as massive machine type communication (mMTC). NR is expected to deliver extreme broadband and ultra-robust, low latency connectivity and massive networking to support the Internet of Things (IoT). With IoT and machine-to-machine (M2M) communication becoming more widespread, there will be a growing need for networks that meet the needs of lower power, low data rate, and long battery life. It is noted that, in 5G, the nodes that can provide radio access functionality to a user equipment (i.e., similar to Node B in UTRAN or eNB in LTE) may be named gNB when built on NR radio and may be named NG-eNB when built on E-UTRA radio.

BRIEF DESCRIPTION OF THE DRAWINGS:

For proper understanding of example embodiments, reference should be made to the accompanying drawings, wherein:

Fig. 1a illustrates an example of data transmission coordination between cells in the uplink direction, according to some embodiments;
Fig. 1b illustrates an example of data transmission coordination between cells in the downlink direction, according to some embodiments;
Fig. 2a illustrates an example signal diagram of data transmission coordination between cells where a source satellite and a target satellite collaborate to coordinate data transfer completion, according to some embodiments;
Fig. 2b illustrates an example signal diagram of data transmission coordination between cells where a source satellite pushes a data transfer status to a target satellite to complete a data transfer, according to some embodiments;
Fig. 3a illustrates an example signal diagram of data transmission coordination between cells where a source satellite and a target satellite utilize radio link control (RLC) coordination to complete a data transfer, according to some embodiments;
Fig. 3b illustrates an example signal diagram of data transmission coordination between cells where a source satellite and a target satellite utilize physical layer coordination to complete a data transfer, according to some embodiments;
Fig. 4 illustrates an example flow diagram of a method, according to some embodiments;
Fig. 5 illustrates an example flow diagram of a method, according to some embodiments;
Fig. 6 illustrates an example flow diagram of a method, according to some embodiments;
Fig. 7a illustrates an example block diagram of an apparatus, according to an embodiment; and
Fig. 7b illustrates an example block diagram of an apparatus, according to another embodiment.

DETAILED DESCRIPTION:

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for data transmission coordination between cells is not intended to limit the scope of certain embodiments but is representative of selected example embodiments.

The features, structures, or characteristics of example embodiments described throughout this specification may be combined in any suitable manner in one or more example embodiments. For example, the usage of the phrases "certain embodiments," "some embodiments," or other similar language, throughout this specification refers to the fact that a particular feature, structure, or characteristic described in connection with an embodiment may be included in at least one embodiment. Thus, appearances of the phrases "in certain embodiments," "in some embodiments," "in other embodiments," or other similar language, throughout this specification do not necessarily all refer to the same group of embodiments, and the described features, structures, or characteristics may be combined in any suitable manner in one or more example embodiments. In addition, the phrase "set of' refers to a set that includes one or more of the referenced set members. As such, the phrases "set of," "one or more of," and "at least one of," or equivalent phrases, may be used interchangeably. Further, "or" is intended to mean "and/or," unless explicitly stated otherwise.

Additionally, if desired, the different functions or operations discussed below may be performed in a different order and/or concurrently with each other. Furthermore, if desired, one or more of the described functions or operations may be optional or may be combined. As such, the following description should be considered as merely illustrative of the principles and teachings of certain example embodiments, and not in limitation thereof.

Third Generation Partnership Project (3GPP) may consider non-terrestrial networks (NTNs) for fifth generation new radio (5G NR). A goal of these considerations may include providing 5G NR service to users on Earth, for example, through low-Earth orbit (LEO) satellites. One of the main challenges in NTN and LEO satellites is that the satellites move at high speed (e.g., 7.5 kilometers/second (km/s), or faster). Because of this, even non-moving devices can experience a number of mobility events, such as handovers and cell reselections, in a short period of time, such as a few seconds to a few minutes. Several enhancements and improvements have been considered to address that challenge.

For future releases, narrow-band Internet of Things (NB-IoT)/enhanced machine type communication (eMTC) support for NTNs may be considered. One goal of these considerations is related to mobility, such as RAN2 aspects related to idle mode and connected mode mobility (e.g., radio link failure (RLF)-based for NB-IoT and handover-based for eMTC).

NB-IoT may be designed for infrequent and short messages between the UE and the network, potentially with extended coverage as compared to LTE. The target coverage extension of NB-IoT may be achieved by means of reducing the data rate, (e.g., lowering the transmission bandwidth (for uplink) or using repetitions in time (for uplink and downlink)). There may be a large set of repetitions allowed per radio channel. In uplink, the transmission can be repeated 1, 2, 4, 8, 16, 32, 64, or 128 times. In downlink, the possible repetitions can include repetitions of 1, 2, 4, 8, 16, 32, 64, 128, 192, 256, 384, 512, 768, 1024, 1536, or 2048 times. NB-IoT's transport block size (TBS) table may have a combination of 14 values for a modulation and coding scheme (MCS) and 1-10 resources allocated (i.e., subframes in downlink and resource units in uplink). For both uplink and downlink, the minimum TBS may be 16 bits and may be a maximum of 2536 bits. The repetition pattern within the allocated resources in NB-IoT may be realized by using cyclic repetition. In each cycle, mapped subframes in the allocated resources may be repeated consecutively Z times, where Z can be calculated as, for narrow band physical downlink shared channel (NPDSCH) (not carrying the broadcast control channel (BCCH)):

$$Z = \min(4, N_{REP})$$

or for narrow band physical uplink shared channel (NPUSCH):

$$Z = \begin{cases} min\left(\left\lceil {}^{N_{REP}}/_{2} \right\rceil,\ 4\right), & N_{sc}^{UL} > 1 \\ 1, & N_{sc}^{UL} = 1 \end{cases}$$

where $N_{sc}^{UL}$ may be the number of allocated subcarriers in uplink and $N_{REP}$ may be the number of repetitions. The scrambling sequence may be reset at the start of the codeword transmission or retransmission. For certain coverage conditions (e.g., the ones that may be expected in NTN), a lower number of subcarriers may be used (e.g., singe-tone) together with a smaller subcarrier spacing (e.g., 3.75 kilohertz (kHz)) to boost the transmission's power spectral density (PSD).

To send data to an application, two optimizations for cellular IoT (CIoT) may be used in NB-IoT. First, control plane CIoT evolved packet system (EPS) optimization may enable support for efficient transport of user data (Internet protocol (IP), non-IP, or short message service (SMS)) over control plane via the mobility management entity (MME) without triggering data radio bearer establishment. To do that, the data packets may be sent encapsulated in non-access stratum (NAS) signalling messages to the MME. Second, user plane CIoT EPS optimization may enable support for change from EPS mobility management-IDLE (EMM-IDLE) mode to EMM-CONNECTED mode without the need for using the service request procedure. For example, the radio resource control (RRC) connection may be suspended and resumed by means of two new control procedures: connection suspend and resume. The suspend/resume feature may allow for temporarily suspending the RRC connection and may store the UE's context in the eNB and the core while the UE is in RRC-Idle state.

Additionally, in a previous release, early data transmission (EDT) may enable the UE in RRC-Idle mode to transmit data in Msg3 of the random access procedure. In this case, the UE may not switch to RRC-CONNECTED mode unless the MME or the eNB decides to move the UE to connected mode. EDT can be used together with control or user plane CIoT EPS optimizations. NB-IoT currently does not support some functionalities, such as inter-radio access technology (RAT) mobility, handover, measurement reports, etc. It may be assumed that the UE can exchange its messages while being served from one cell. Therefore, a handover procedure during RRC_CONNECTED mode may not be needed. If such a cell change is used, the UE may have to switch to the RRC IDLE state and re-select another cell in that state. This may happen through the UE experiencing, for example, an RLF, because of too many out-of-sync messages.

Uplink/downlink NB-IoT data transmissions can result in long transfer times if the UE is in challenging radio conditions. Assuming a certain data transmission needs X repetitions, this can be translated into an amount of time needed. For example, the maximum transmission times that may happen may be, for downlink (NPDSCH with subframe length 1 millisecond (ms), with 2048 repetitions, and with 10 subframes):

$$t_{DLmax} = t_{SF} \cdot N_{REP} \cdot N_{SF} = 1ms \cdot 2048 \cdot 10 = 20480ms$$

or for uplink (NPUSCH format 1 with 128 repetitions, with 10 resource units, and with 1 subcarrier allocated):
if 3.75 kHz subcarrier spacing:

$$t_{ULmax} = t_{slot} \cdot N_{slots} \cdot N_{REP} \cdot N_{RU} = 2ms \cdot 16 \cdot 128 \cdot 10 = 40960ms$$

or if 15 kHz subcarrier spacing:

$$t_{ULmax} = t_{slot} \cdot N_{slots} \cdot N_{REP} \cdot N_{RU} = 0.5ms \cdot 16 \cdot 128 \cdot 10 = 10240ms$$

Even if the UE is stationary, due to the fast-moving cells in NTN operation, the available time before an RLF and corresponding cell reselection may be smaller than the required transmission time. As an example, a cell radius of 100 km may lead to cell reselections every 13 seconds, or more often (e.g., based on the satellite moving approximately 7.5 km/s relative to Earth). Starting the repetitions too late, for example, with too little time available before RLF/cell reselection, may result in a waste of radio resources and power. The latter may be one of the main optimisation criteria for NB-IoT. In addition, the link budget in NTN may make it likely that many repetitions will be needed. For downlink transmissions, the network may have the power to schedule the data transmission at the right time, considering also the limitations due to the periods the UE is reachable if power saving mechanisms, such as discontinuous reception, are applied (but the total available time may still be shorter than the calculated downlink transmission time). As uplink transmissions can be started from the UE anytime, they cannot be controlled by the network beyond the time in the cell (e.g., the network may only be able to deny the request or accept and schedule the request). If accepting and scheduling is not possible due to too little available time, the network may only be able to deny the request, and the UE may have to try again after a certain amount of time.

In some previous NB-IoT releases, scheduling request (SR) operations may be implemented as a higher-layer procedure, which may trigger a random access procedure to request sufficient UL resources to send a buffer status report (BSR). A previous release has added new, more resource and power efficient, ways to achieve this goal, which can be configured by the eNB. For example, with respect to activation of SR with semi-persistent scheduling (SPS) BSR and for a connected mode UE, an eNB may be able to configure, by RRC, periodic NPUSCH resources for the UE to send a BSR. This may be used to inform the eNB when pending traffic has arrived in the UE's buffer. The resources may be activated and de-activated (released) by dynamic signalling on narrow band physical downlink control channel (NPDCCH).

As another example, with respect to activation of SR with HARQ-ACK transmission, the SR may be combined with a hybrid automatic repeat request (HARQ) acknowledgement (ACK) when a HARQ ACK is transmitted. As another example, with respect to activation of SR without HARQ-ACK transmission, the SR may be transmitted in a dedicated narrow band physical random access channel (NPRACH) resource. As such, the NPRACH resources may have to be configured via dedicated signalling. This alternative may include a timer for SR transmission on the NPRACH resource for SR (e.g., the *sr-ProhibitTimer*), which can take values from 0 to 7. The SR prohibit timer value may be in number of SR period(s). The UE may start this timer after transmitting an SR. When this timer is running, the UE may not be allowed to transmit a SR on NPRACH. However, these SR alternatives may not help the problems described above as they may only be configured in the serving cell and/or may rely on RRC signalling configuration that cannot be changed to arbitrary values.

Handover procedures may enable handover of an RRC connected UE from a source eNB to a target eNB using the X2 reference point. To prepare the handover, the source eNB may pass needed information to the target eNB. During handover execution, user data can be forwarded from the source eNB to the target eNB. Upon handover, the source eNB may forward, to the serving gateway, the uplink packet data convergence protocol (PDCP) service data units (SDUs) successfully received in-sequence until the sending of the status transfer message to the target eNB. Then, at that point in time, the source eNB may stop delivering uplink PDCP SDUs to the serving gateway (SGW) and may discard any remaining uplink radio link control (RLC) protocol data units (PDUs). Correspondingly, the source eNB may not forward the uplink RLC context to the target eNB. Therefore, this procedure may not solve the problems described above as incomplete RLC PDUs may be discarded. In addition, handover is not currently supported by NB-IoT.

With respect to RLC segmentation, at the RLC layer, the packets can be segmented (or concatenated) in suitable units that fit the received transport blocks granted for transmissions. The size of the RLC SDU may depend on the indication given for a particular transmission opportunity by the medium access control (MAC) layer. RLC can be configured for data transfer in one of the following modes: transparent mode (TM), unacknowledged mode (UM), and acknowledged mode (AM). Segmentation can be done in UM and AM.

However, segmentation alone may not solve the problems described above as more than one gNB may serve the UE while it is transmitting data and, after the RLF, the RLC SDUs are discarded (e.g., during RRC connection reestablishment procedure if the UE is using control plane CIoT EPS optimizations). If the NB-IoT is using EDT, no segmentation may be allowed in the third message (Msg3) of the random access procedure. Additionally, another disadvantage of this method is the control overhead because of RLC/MAC headers and the cyclic redundancy check (CRC). When an RLC SDU is divided into segments, each transport block (TB) may have its own RLC/MAC header that may be at least 24 bits. This means that segmentation may increase the number of bits used for MAC and RLC headers as well as for CRC (that adds another 24 bits in layer 1) in order to transmit the same payload. Once the TB is formed, the TB can be repeated several times. The arrangement of the repetitions may depend on the number of subcarriers for one resource unit (RU), the subcarrier spacing, and the number of repetitions. As can be understood from the above, there is a need for a way to continue a data transmission at a target cell after the data transmission is interrupted, without having to restart the data transmission at the target cell.

Some embodiments described herein may provide for data transmission coordination between cells. For example, certain embodiments may provide for continuing the data transmission after a transmission disruption due to the cell mobility in NTN deployments (e.g., enabling coordination of long NB-IoT transmissions in time between NTN cells instead of initiating a new transmission from the beginning of the data after cell reselection). In this way, certain embodiments described herein may facilitate continuation of a data transfer at one cell based on a transmission disruption between another cell and a UE. This reduces or eliminates duplicative transmission of data as a result of a transmission disruption, which conserves processing and/or computing resources of UEs and cells, and conserves network resources (e.g., bandwidth) that would otherwise be consumed as a result of duplicative transmission.

Fig. 1a illustrates an example of data transmission coordination between cells in the uplink direction, according to some embodiments. Fig. 1a illustrates a UE 100, a source cell 102 (e.g., a source NTN satellite), and a target cell 104 (e.g., a target NTN satellite). Assume, for the example illustrated in Fig. 1a, that the source cell 102 and the target cell 104 are travelling from the right side of Fig. 1a to the left side of Fig. 1a.

As illustrated at 106, the UE 100 may transmit, to the source cell 102, a scheduling request for UL resources. In certain embodiments, the UE 100 may include a NB-IoT device and the scheduling request may be transmitted with a HARQ ACK in the NPUSCH or may be transmitted using NPRACH resources (where specific resources may be dedicated for the scheduling request). As illustrated at 108, the source cell 102 may perform a scheduling allocation computation, and the result of this computation may indicate that coordination between NTN cells is needed. For example, the source cell 102 may determine that the scheduling request cannot be completed based on a needed resource allocation and a serving time for a scheduling grant and a data transfer associated with the scheduling request (e.g., the source cell 102 may determine that a transmission disruption is expected to occur based on the resource allocation and/or the serving time for the sum of the time needed to transfer the scheduling grant and the data). In some embodiments, the source cell 102 may determine that the data transfer cannot be completed based on the UE declaring a transmission disruption in connection with a connection request, based on determining that the UE has stopped transmitting data (e.g., has stopped repetitions in the case of an uplink data transfer or has stopped ACK/NACK transmission in the case of a downlink data transfer), and/or the like.

As used herein, a scheduling grant may refer to, or include, information that informs a UE that it may either receive downlink data (e.g., on the physical downlink shared channel (PDSCH)), or transmit uplink data (e.g., on the physical uplink shared channel (PUSCH)), and can refer to, for example, a downlink (DL) assignment or an uplink (UL) grant in the case of NR. A scheduling grant may be signaled on the physical downlink control channel (PDCCH) in downlink and may inform the UE about time-frequency resources where data is located, the applied modulation and coding scheme (MCS) for the data, the HARQ to be used, and/or the like.

As illustrated at 110, the source cell 102 may transmit, to the UE, a UL grant for the source cell 102. After receiving the UL grant, the UE may begin an UL data transfer to the source cell 102. As illustrated at 112, there may be a transmission disruption (e.g., an RLF or another event that an event that limits the serving time of a cell or interrupts the data transfer) between the source cell 102 and the UE 100, and may perform a cell reselection to the target cell 104. As illustrated at 114, the source cell 102 may provide, to the target cell 104, information related to the ongoing UL traffic transfer, so that the UL data transfer can be continued at the target cell 104. For example, the source cell 102 may provide information related to the status of a data transfer from the UE 100, where the status-related information may include soft bits and/or repetitions associated with the data transfer, so that the target cell 104 can combine data that the source cell 102 has already received with data that the target cell 104 is to receive from the UE 100. Additionally, or alternatively, the source cell 102 may provide other information to the target cell 104, such as information that identifies the UE 100 or that can be used by the target cell 104 to connect to the UE 100, may provide information to the UE 100, such as information that identifies the target cell 104 or that can be used by the UE 100 to connect to the target cell 104, and/or the like. This provisioning of information can occur after occurrence of the transmission disruption, as illustrated in Fig. 1a, or can occur prior to the transmission disruption since the source cell 102 may be capable of predicting the occurrence of the transmission disruption, as described above. As illustrated at 116, the target cell 104 may provide, to the source cell 102, an ACK confirming that the data transfer is to be continued at the target cell 102, that the source cell 102 and the target cell 104 are to coordinate with respect to continuing the data transfer, and/or the like.

As illustrated at 118, based on the occurrence of the transmission disruption, the UE 100 and the target cell 104 may perform an initial random access procedure and the target cell 1 04 may provide a UL grant for the remaining UL data associated with the data transfer at the target cell 104. The target cell 104 may provide the UL grant to the UE 100 after the occurrence of the transmission disruption and/or after the connection setup between the UE 100 and the target cell 104. A summary of certain embodiments of the example illustrated in Fig. 1a is provided at 120. For example, assuming the required time for the data transfer is 8 repetitions, the first 4 repetitions may be completed at the source cell 102 prior to the transmission disruption and the remaining 4 repetitions may be completed at the target cell 104 after the transmission disruption. As explained above, and elsewhere herein, to facilitate this continuation of the data transfer, the source cell 102 may provide information related to the status of the data transfer to the target cell 104.

As described above, Fig. 1a is provided as an example. Other examples are possible, according to some embodiments.

Fig. 1b illustrates an example of data transmission coordination between cells in the downlink direction, according to some embodiments. Fig. 1b illustrates the UE 100, the source cell 102, and the target cell 104, where the source cell 102 and the target cell 104 are moving, for example, from the right side of Fig. 1b to the left side of Fig. 1b.

As illustrated at 122, a SGW may provide, to the source cell 102, DL data for the UE. As illustrated at 124, the source cell 102 may perform a scheduling allocation computation, and the result of this computation may indicate that coordination between NTN cells is needed, in a manner similar to that described above. As illustrated at 126, the source cell 102 may provide, to the UE 100, a DL grant for the source cell 102. After transmission of the grant, the source cell 102 may begin a DL data transfer to the UE 100. As illustrated at 128, there may be a transmission disruption between the UE 100 and the source cell 102, and may perform a cell reselection to the target cell 104.

As illustrated at 130, the source cell 102 may provide, to the target cell 104, information related to the ongoing DL traffic transfer, so that the DL data transfer can be continued at the target cell 104. Additionally, or alternatively, the source cell 102 may provide other information to the target cell 104, such as information that identifies the UE 100 or that can be used by the target cell 104 to connect to the UE 100, may provide information to the UE 100, such as information that identifies the target cell 104 or that can be used by the UE 100 to connect to the target cell 104, and/or the like. As illustrated at 132, the target cell 104 may provide, to the source cell 102, an ACK, in a manner similar to that described above and elsewhere herein.

As illustrated at 134, based on the occurrence of the transmission disruption, the UE 100 and the target cell 104 may perform an initial random access procedure and the target cell 1 04 may provide a DL grant for the remaining DL data associated with the data transfer at the target cell 104. A summary of certain embodiments of the example illustrated in Fig. 1b, similar to that illustrated in Fig. 1a, is provided at 136.

As described above, Fig. 1b is provided as an example. Other examples are possible, according to some embodiments.

While Figs. 1a and 1b illustrate an overview of UL and DL implementations of certain embodiments, the proposed collaboration between the source and target NTN satellites to continue the data transfer after transmission disruption can be applied adopting various approaches, described in more detail elsewhere herein. For example, the source and target NTN satellites may collaborate to coordinate the data transfer. In this approach, there may be a set of signalling exchanges between the source and target NTN satellites to agree on the resource allocation for both considering the available serving time at the source NTN satellite. A UL example of this approach is illustrated in, and described with respect to, Fig. 2a.

As another example of an approach, an example of which is illustrated in, and described with respect to, Fig. 2b, the source NTN satellite may push the information related to the data transfer to the target NTN satellite. This approach may minimize the signalling needed between NTN satellites as the target NTN satellite can handle the data transfer as it needs, which may conserve computing, processing, and/or network resources relative to an approach that uses more signalling. For scenarios where more than two NTN satellites are involved in the data transfer, this approach may simplify the management of the data continuity among several NTN satellites due to that multiple grants (in the same satellite or many of them) can be used without prior coordination among satellites until the data transfer is successfully completed. As example for this alternative, the continuation of a downlink or uplink transmission may be based on the NTN serving cell (e.g., the source cell) pushing the buffered and/or ongoing packets to the next NTN cell (target cell) together with the associated information of the allocation configured beforehand or while the transmission disruption is occurring.

In addition to the collaboration approaches between NTN satellites, various coordination levels can be considered for the data transfer continuity. For example, coordination may occur at the RLC layer, an example of which is illustrated in, and described with respect to, Fig. 3a. The long data transmission in time may be expected to be segmented in different TBs (considering the needed repetitions) that can be transferred during the serving time at each cell, thus, when the transmission disruption occurs, the source cell may forward, for uplink transmission, copies of the received TBs to the next serving cell together with the associated allocation information. For the downlink, the source cell may forward the remaining part of the RLC packet and/or information of what has been transmitted to the next serving cell. In this case, each cell may know the packet is size L, but grant resources (e.g., resource units (RUs) to denote resources in uplink, subframes (SFs) to denote resources in downlink, repetitions) that can fit in their serving window (i.e., the grant may be smaller than L) so that the data already sent from/to the UE, which was already transferred in the previous cell before the transmission disruption, can be used in the next cell.

A possible alternative for this option is to coordinate how the segmentation should be done between source and target cells before allocating resources at the source cell (instead of each cell configuring its allocation independently). That is, the source cell may interact with the known target cell to notify there is a data packet L that needs coordinated segmentation. However, this alternative may use a set of message exchanges between the NTN cells, which would consume processing and/or computing resources that the previous RLC layer option does not consume. This coordination option can be adopted, for example, when the UE is using user plane optimization and control plane optimization procedures but not for EDT as segmentation cannot be used in Msg3.

As another example of a coordination level, coordination can occur at the physical layer. In this approach, the source cell may allocate resources for the UE and, when the transmission disruption occurs, the information related to the original resource allocation, the received soft bits, and/or a recommended grant configuration for the remaining data may be sent to the target cell in the uplink. In the downlink, the next serving cell may receive information about the allocation in the previous cell and the number of repetitions which have been performed, such that the target cell does not start from the first repetition again.

The difference compared to the RLC layer option is that cells may be allocating resources for the whole transmission without considering segmentation (e.g., each of them may allocate resources to the whole packet of size L). The cells may attempt to receive/transmit as many soft bits as possible and, if the transfer cannot be finished, related information may be sent to the next cell to continue the transfer. Ordinarily, when repetitions are used, the same data may be repeated. But with certain embodiments, the UE, which without the invention may attempt to perform X repetitions after each transmission disruption, may instead perform Y (smaller than X) repetitions in the first cell and then Z (smaller than X) repetitions in the next cell. This coordination option can be adopted when the UE is using user plane optimization, control plane optimization, and EDT procedures, as the repetitions may be specifically granted at each cell when allocating resources for the data transfer.

Since the UEs at some point during the transmission may experience a transmission disruption, such as due to the serving cell moving out of range, certain embodiments may provide for the network to indicate to the UE that the data transfer will be discontinuous (e.g., that it may not be possible to complete while connected to the current serving cell). When receiving this indication (e.g., through the downlink control information (DCI) carrying the scheduling information), the UE may determine to maintain its data buffers and/or scheduling configuration (e.g., timing, needed resources, and/or the like for a data transfer), during the transmission disruption. Alternatively, the UEs may be instructed/specified not to flush the data buffers when they experience a transmission disruption, but may rather flush them after data timer expiry or ACK reception. Certain alternative embodiments may provide for similar behaviour when mobility is performed through actual handover instead of cell reselection (for instance for eMTC or, if handover is enabled, in following releases for NB-IoT). Based on this, certain embodiments can be used as an extension to the conventional handover procedure to enable the RAN configuring discontinuous data transfer at the UE and the data forwarding (uplink and downlink) between cells for all RLC data radio bearers (DRBs) modes.

Fig. 2a illustrates an example signal diagram of data transmission coordination between cells where a source satellite and a target satellite collaborate to coordinate data transfer completion, according to some embodiments. The example of Fig. 2a is presented in the context of an uplink data transfer. However, certain embodiments illustrated in, and described with respect to, Fig. 2a equally apply to a downlink data transfer. Fig. 2a illustrates a UE, a source NTN satellite (e.g., a source cell), and a target NTN satellite (e.g., a target cell).

As illustrated at 200, the UE may transmit, to the source NTN satellite, a scheduling request (e.g., for an uplink data transfer). As illustrated at 202, the source NTN satellite may derive the needed resource allocation and the available serving time for the scheduling request. Based on this determination, the source NTN satellite may determine that the data transfer is not feasible (e.g., there may not be sufficient resources and/or serving time available at the source NTN satellite for the source NTN satellite to complete the entire data transfer) and may trigger early collaboration with the target NTN satellite.

As illustrated at 204, the source NTN satellite may transmit, to the target NTN satellite, a collaboration request (e.g., based on determining that the scheduling request cannot be fulfilled at the source NTN satellite). For example, the collaboration request may include a request for the target NTN satellite to collaborate with the source NTN satellite on completing the data transfer based on the source NTN satellite determining that the data transfer cannot be fully completed at the source NTN satellite. As illustrated at 206, the target NTN satellite may transmit, to the source NTN satellite, a collaboration response. For example, the collaboration response may indicate that the target NTN satellite is to collaborate with the source NTN satellite.

As illustrated at 208, both satellites may be aware that the data transfer completion may need coordination based on the operations at 202 through 206. Accordingly, the source NTN satellite and the target NTN satellite may pre-configure, via signaling, the radio resources at the source NTN satellite and the target NTN satellite. For example, the source NTN satellite and the target NTN satellite may allocate a portion of the total needed resources for the data transfer to the source NTN satellite for a portion of the data transfer to be completed prior to an expected transmission disruption and another portion of the total needed resources for the data transfer to the target NTN satellite for another portion of the data transfer to be completed after the expected transmission disruption. As illustrated at 210, the source NTN satellite may provide, to the UE, information that identifies the resource allocation for the data transfer. For example, the information may identify the resource allocation for the portion of the data transfer to be completed at the source NTN satellite and/or for the other portion of the data transfer to be completed at the target NTN satellite. In some embodiments, if the both satellites collaborate to configure the transmission prior to the transmission disruption, the source NTN satellite may provide, to the UE, information that identifies the next cell to select during cell reselection using cell identity.

As illustrated at 212, the communication link between the UE and the source NTN satellite may experience a transmission disruption, such as an RLF. As illustrated at 214, the source NTN satellite may detect the UE's RLF. For example, the source NTN satellite may detect the RLF at the expected time (e.g., based on satellite ephemeris and UE location), may detect that the UE has declared an RLF, may detect that the UE has stopped transmitting data, and/or the like. Additionally, or alternatively, the source NTN satellite may trigger, to the target NTN satellite, notification of the RLF and/or completion of the data transfer at the target NTN satellite.

As illustrated at 216, the source NTN satellite may perform, to the target NTN satellite, a data transmission status transfer. For example, the source NTN satellite may transmit information related to a status of the data transfer, where the information may be related to continuing the data transfer at the target NTN satellite. Specifically, certain embodiments may include both source and target cells exchanging information regarding current UE status (UL and DL pending traffic). The information exchange may be based on control plane interactions at the X2 interface, such as a SN Status Transfer exchange between source and target eNBs during handover execution. However, for certain embodiments, this exchange may include additional information elements and the preservation of the PDCP status for RLC modes (e.g., AM, UM, and TM). To enable the data transfer continuation between more than one serving cell, the information elements exchanged at X2 interface may include a status of UL PDCP SDUs (uplink PDCP SN receiver status and the downlink PDCP SN transmitter status), UL/DL count value (e.g., a PDCP-SN and hyper-frame number that the target cell may receive during a context transfer), uplink/downlink RLC context, data forwarding of the buffered and ongoing RLC PDUs or soft bits that were being transmitted before RLF, original UE's BSR (for uplink), resource allocation configured in source cell, and/or an indication of the pending data to complete the data transfer.

As described elsewhere herein, the information transmitted may include buffered data and expected pending data associated with the data transfer, original radio resource allocated for the data transfer (e.g., which may include DCI that identifies the number of repetitions), an original BSR for the data transfer, and/or the like. As illustrated at 218, the target NTN satellite may transmit, to the source NTN satellite, an acknowledgement of the data transmission status transfer.

As illustrated at 220, the UE may perform a cell reselection (e.g., a reselection from the source NTN satellite to the target NTN satellite). For example, the UE may perform the cell reselection based on the RLF at 212. In some embodiments, the UE may utilize an identifier for the target cell and/or other information associated with connecting to the target cell to perform the cell reselection (e.g., the source NTN satellite may have provided the identifier or the other information to the UE prior to the UE performing the cell reselection, such as at 210). As illustrated at 222, the UE and the target NTN satellite may perform operations related to completing a random access procedure. As illustrated at 224, the target NTN satellite may provide, to the UE, a resource allocation at the target NTN satellite and/or provide information that identifies the resource allocation at the target NTN satellite (e.g., if the source NTN satellite has not already provided this information to the UE) to continue the data transfer at the target NTN satellite. This resource allocation may be based on pre-configured allocation of resources determined with the source NTN satellite. The UE may provide uplink data to the target NTN satellite after the resource allocation. As illustrated at 226, the target NTN satellite may decode the packets associated with the uplink data.

As described above, the source cell collaborates with the target cell to coordinate the data continuity, where the coordination may be performed prior to the start of the data transmission. That is, the collaboration may be performed when the source cell is aware a new grant is needed for new UL/DL traffic available and derives the grant configuration. At this point, the source cell may determine that it is not possible to finalize the packet transmission before the cell serving time expires (e.g., based on using the UEs location and predictable satellite movement). Therefore, the source cell may trigger the coordination between source and target cells to determine the possible resource allocation per cell.

As part of the resource allocation determination, the source and target NTN satellites can coordinate the resource allocation in both satellites. That is, certain embodiments may enable both satellites to predict how the continuity of the data transfer after RLF can be achieved (e.g., both satellites may determine the portions of the total resource allocation needed at each satellite to complete the data transfer based on the movement of the satellites, the size of the data transfer, the amount of available time remaining at the serving satellite, and/or the like). This may be feasible in satellite systems as the satellite movement is deterministic and, therefore, the path loss may be predictable based on this movement and/or information regarding the UE's position. If the source and target cells are on satellites on the same orbit, the source cell may have the path loss information already from its own path. To perform these predictions, the source and/or target satellites may estimate the interference and resources for the data transfer. This can be done with the help of information exchanged between the source and target cell or it can be based on a statistical approach. Then, the resource allocation for the source and target NTN satellites may be forwarded to the UE to facilitate faster reconfiguration in the target NTN satellite after the RLF.

As indicated above, Fig. 2a is provided as an example. Other examples are possible, according to some embodiments.

Fig. 2b illustrates an example signal diagram of data transmission coordination between cells where a source satellite pushes a data transfer status to a target satellite to complete a data transfer, according to some embodiments. The example of Fig. 2b is presented in the context of an uplink data transfer. However, certain embodiments illustrated in, and described with respect to, Fig. 2b equally apply to a downlink data transfer. Fig. 2b illustrates a UE, a source NTN satellite (e.g., a source cell), and a target NTN satellite (e.g., a target cell).

As illustrated at 228, the UE may transmit, to the source NTN satellite, a scheduling request, in a manner similar to that described above at 200. As illustrated at 230, the source NTN satellite may derive the needed resource allocation and the available serving time and may determine that completing the data transfer at the source NTN satellite is not feasible, in a manner similar to that described at 202. In this case, however, the source NTN satellite may not trigger early collaboration, as was performed at 202. As illustrated at 232, the source NTN satellite may provide, to the UE, information that identifies the resource allocation for the data transfer, in a manner similar to that described above at 210, except that the information may merely be related to the resource allocation at the source NTN satellite.

As illustrated at 234, the communications link between the UE and the source NTN satellite may experience an RLF, similar to that at 212. As illustrated at 236, the source NTN satellite may detect the UE's RLF, in a manner similar to that described at 214. Additionally, or alternatively, the source NTN satellite may push, or determine to push, a data transmission status transfer to the target NTN satellite. The data transmission status transfer may include information similar to that described above with respect to Fig. 2a (e.g., information that facilitates continuation of the data transfer at the target NTN satellite). As illustrated at 238 and 240, the source NTN satellite may provide the data transmission status transfer to the target NTN satellite and may receive an ACK from the target NTN satellite, in a manner similar to that described above at 216 and 218, respectively.

As illustrated at 242, the UE may perform a cell reselection, in a manner similar to that described above at 220. As illustrated at 244, the UE and the target NTN satellite may perform operations related to completing a random access procedure, in a manner similar to that described above at 222. As illustrated at 246, the target NTN satellite may provide, to the UE, a new resource allocation, or information that identifies the new resource allocation, at the target NTN satellite to continue the data transfer. The new resource source allocation may be determined based on the status information received from the source NTN satellite (e.g., the status information may indicate a resource allocation at the source NTN satellite for the data transfer, a remaining amount of resources needed for the data transfer at the target NTN satellite, and/or the like). The UE may provide uplink data to the target NTN satellite based on receiving the resource allocation. As illustrated at 248, the target NTN satellite may decode the UL packet associated with the uplink data.

As illustrated in, and described with respect to Fig. 2b, the source cell may push the transmission status and related information to the target cell. In this case, the coordination may be needed when the data transmission is ongoing and a transmission disruption interrupts it. The source cell may trigger the coordination with the target cell and may forward information related to the data transmission (before the RLF occurs or after it begins). The target cell may analyze the received information and may configure a grant to schedule the remaining part of the transmission in its cell. The coordination of both cells when scheduling the data transfer can follow various options.

One example option may include use of the knowledge of the deterministic satellite movement to enhance reuse of repetitions. The source cell may schedule the UE with an allocation that may have a possible transmission disruption after a potential early decoding termination point is reached in the transmission or a cycle of repetitions is terminated (e.g., a redundancy version (RV) in uplink). In this way, the source cell may raise the probability of the target cell using the forwarded soft bits or RLC PDUs in combination with the new grant at the target cell to finalize the rest of the transmission needed to decode the whole packet. Another example option may not include consideration of the deterministic satellite movement. The source cell may schedule the UE with an allocation to ensure the transmission is decodable without considering that the transmission may not be ended before the service time at the source cell expires.

Certain embodiments presented in Fig. 2b may allow the data transfer continuity to be handled in a cumulative way as the target NTN satellite can analyze the information received from the source NTN satellite and may configure a new UE grant with the estimated resources needed to be able to complete the data transfer successfully. Additionally, or alternatively, the signalling between NTN satellites may be less than the signalling with respect to certain embodiments of Fig. 2a as certain embodiments of Fig. 2b may have the source NTN satellite push the transmission status to the target NTN satellite.

As indicated above, Fig. 2b is provided as an example. Other examples are possible, according to some embodiments.

Fig. 3a illustrates an example signal diagram of data transmission coordination between cells where a source satellite and a target satellite utilize radio link control (RLC) coordination to complete a data transfer, according to some embodiments. The example of Fig. 3a is presented in the context of an uplink data transfer. However, certain embodiments illustrated in, and described with respect to, Fig. 3a equally apply to a downlink data transfer. Fig. 3a illustrates a UE, a source NTN satellite (e.g., a source cell), and a target NTN satellite (e.g., a target cell).

As illustrated at 300, the UE may transmit, to the source NTN satellite, a scheduling request (e.g., for 60 bytes (B)). As illustrated at 302, the source NTN satellite may derive the needed resource allocation and the available serving time and may determine that the data transfer is not feasible, in a manner similar to that described above at 202. As illustrated at 304, the source NTN satellite may determine the UL grant for the scheduling request considering the service time available (e.g., considering the amount of time available at the source NTN satellite before the source NTN satellite moves out of range of the UE). For example, the UL grant may be for 2 repetitions of time and 40B. As illustrated at 306, the source NTN satellite may transmit, to the UE, the source NTN satellite may transmit, to the UE, the UL grant. For example, the UL grant may be for the 2 repetitions and the 40B portion determined at 304.

As illustrated at 308, the UE may determine RLC PDU segments (for the 40B) and the 2 repetitions. As illustrated at 310 and 312, the UE may transmit, to the source NTN satellite, the UL data in a first repetition (rep1) and in a second repetition (rep2). As illustrated at 314, the communications link between the UE and the source NTN satellite may experience a transmission disruption, such as an RLF, in a manner similar to that described above at 212.

As illustrated at 316, the source NTN satellite may detect the UE's RLF, in a manner similar to that described above at 236. As illustrated at 318, the source NTN satellite may transmit, to the target NTN satellite, a data transmission status transfer, in a manner similar to that described above at 216. As illustrated at 320, the target NTN satellite may transmit, to the source NTN satellite, an ACK, in a manner similar to that described above at 218.

As illustrated at 322, the UE may perform a cell reselection to the target NTN satellite, in a manner similar to that described above at 220. As illustrated at 324, the UE and the target NTN satellite may perform operations related to a random access procedure, in a manner similar to that described above at 222. As illustrated at 326, the target NTN satellite may provide a new UL grant using the data transmission status transfer provided by the source NTN satellite. For example, the UL grant may be for a pending 20B segment (60B minus 40B transferred to the source NTN satellite equals 20B remaining to be transferred to the target NTN satellite) and for 2 repetitions.

As illustrated at 328, the target NTN satellite may transmit, to the UE, the UL grant. As illustrated at 330, the UE may determine RLC PDU segments and 2 repetitions based on the UL grant. As illustrated at 332 and 334, the UE may transmit, to the target NTN satellite, UL data in 2 repetitions (rep1 and rep2). As illustrated at 336, the target NTN satellite may merge both segments of UL data (the 40B segment received at the source NTN satellite and transferred to the target NTN satellite and the 20B segment received at the target NTN satellite) and may decode the complete UL package.

As described above, Fig. 3a is provided as an example. Other examples are possible, according to some embodiments.

Fig. 3b illustrates an example signal diagram of data transmission coordination between cells where a source satellite and a target satellite utilize physical layer coordination to complete a data transfer, according to some embodiments. The example of Fig. 3b is presented in the context of an uplink data transfer. However, certain embodiments illustrated in, and described with respect to, Fig. 3b equally apply to a downlink data transfer. Fig. 3b illustrates a UE, a source NTN satellite (e.g., a source cell), and a target NTN satellite (e.g., a target cell).

As illustrated at 338, the UE may send a scheduling request to the source NTN satellite, in a manner similar to that described above at 300. As illustrated at 340, the source NTN satellite may derive the needed resource allocation and the available serving time and may determine that the data transfer is not feasible, in a manner similar to that described at 302. As illustrated at 342, the source NTN satellite may determine the UL grant to successfully decode the data associated with the data transfer (e.g., 4 UL repetitions for the 60B of data identified in the scheduling request).

As illustrated at 344, the source NTN satellite may transmit, to the UE, the UL grant, in a manner similar to that described above at 306. As illustrated at 346, the UE may transmit UL data to the source NTN satellite in a first repetition (rep1), in a manner similar to that described above at 310. As illustrated at 348, the UE may transmit UL data to the source NTN satellite in a second repetition (rep2), in a manner similar to that described above at 312.

As illustrated at 350, the communications link between the UE and the source NTN satellite may experience an RLF, in a manner similar to that described above at 314. As illustrated at 352, the source NTN satellite may detect the UE's RLF and may determine that the UL packet cannot be decoded, and may initiate a push data transmission status transfer to the target NTN satellite, in a manner similar to that described above at 316. As illustrated at 354, the source NTN satellite may transmit the data transmission status transfer to the target NTN satellite, as described above at 318. As illustrated at 356, the target NTN satellite may transmit an ACK to the source NTN satellite, in a manner similar to that described above at 320.

As illustrated at 358, the UE may perform a cell reselection, in a manner similar to that described above at 322. As illustrated at 360, the UE and the target NTN satellite may perform operations related to completing a random access procedure, in a manner similar to that described above at 324. As illustrated at 362, the target NTN satellite may provide a new UL grant estimating the remaining needed samples to successfully decode the UL data (e.g., 2 more repetitions) using the data transmission status transfer provided by the source NTN satellite. As illustrated at 364, the target NTN satellite may provide the UL grant to the UE, in a manner similar to that described above at 328.

As illustrated at 366 and 368 the UE may transmit, to the target NTN satellite, UL data in a first repetition and in a second repetition, in a manner similar to that described above at 332 and 334, respectively. As illustrated at 370, the target NTN satellite may combine the repetitions transferred from the source NTN satellite and the repetitions received at the target NTN satellite (total of 4 repetitions), and may decode the complete UL packet.

As described above, Fig. 3b is provided as an example. Other examples are possible, according to some embodiments.

With respect to Figs. 3a and 3b, in case of a downlink scenario, the signalling flow may be similar except for the scheduling request sent from the UE in the first step and the direction of the data transfer. For downlink, the SGW may forward the downlink packet to the source cell serving the UE. When the cell determines that it cannot finish the planned number of repetitions, it may instruct the UE to maintain relevant entities (from RLC to PHY soft bits) during the initial NPDCCH scheduling. Similar to the uplink scenarios, the serving cell may forward relevant information (e.g., number of completed repetitions) to the target cell to continue the transmission of data to the UE after the RLF or other transmission disruption.

To implement embodiments described herein, at the RAN, the source cell may be configured to push the current UE user-plane status (e.g., uplink PDCP SN receiver status, the downlink PDCP SN transmitter status, etc.), the ongoing transmission payload (e.g., RLC SDUs or soft bits), and the associated allocation done at the source cell to the target cell. Additionally, or alternatively, the UE may be configured to not flush the buffers of the ongoing data transfer (e.g., maintain RLC/PDCP/MAC entities after transmission disruption) and/or the UE may, via downlink control information (DCI), receive an indication that a data transfer is a discontinuous data transfer (where the grant is for a part of the data to be transferred and the remaining parts of the transmission (e.g. the repetitions of a same TB) are expected to be continued in a different cell after the transmission disruption).

Fig. 4 illustrates an example flow diagram of a method, according to some embodiments. For example, Fig. 4 shows example operations of a UE (e.g., apparatus 20). Some of the operations illustrated in Fig. 4 may be similar to some operations shown in, and described with respect to, Figs. 1-3b.

In an embodiment, the method may include, at 400, receiving at least one scheduling grant for at least one data transfer with at least one source apparatus and at least one indication that the at least one data transfer is to be continued at at least one target apparatus. At least one buffer of data and at least one scheduling configuration related to the at least one data transfer is to be maintained in the event of at least one transmission disruption. In an embodiment, the method may include, at 402, transmitting, to the source apparatus, at least one portion of the data associated with the at least one data transfer based on the at least one scheduling grant. In an embodiment, the method may include, at 404, receiving at least one other scheduling grant for continuing the at least one data transfer at the at least one target apparatus. In an embodiment, the method may include, at 406, transmitting, to the at least one target apparatus, at least one other portion of the data associated with the at least one data transfer based on the at least one other scheduling grant.

In some embodiments, the at least one scheduling grant for the at least one data transfer may comprise information identifying at least one portion of at least one needed resource allocation to be configured at the at least one source apparatus for the at least one data transfer or at least one other portion of the at least one needed resource allocation to be configured at the at least one target apparatus. In some embodiments, the at least one scheduling grant for the at least one data transfer may comprise information that identifies at least one portion of at least one needed resource allocation to be configured at the at least one source apparatus for the at least one data transfer, or wherein the at least one other scheduling grant for continuing the at least one data transfer at the at least one target apparatus comprises information identifying at least one new resource allocation to be configured at the at least one target apparatus for continuing the at least one data transfer at the at least one target apparatus.

In some embodiments, the at least one scheduling grant may comprise information identifying at least one RLC PDU segment associated with the at least one data transfer and at least one quantity of repetitions to the at least one source apparatus associated with the at least one data transfer. In some embodiments, the method may include transmitting data associated with the at least one data transfer to the at least one source apparatus. In some embodiments, the transmitting may be based on the at least one RLC PDU segment and the at least one quantity of repetitions. In some embodiments, the at least one scheduling grant for the at least one data transfer may comprise at least one scheduling grant associated with the at least one source apparatus to successfully decode the at least one data transfer. In some embodiments, the method may include transmitting data associated with the at least one data transfer to the at least one source apparatus.

In some embodiments, the at least one other scheduling grant for continuing the at least one data transfer may comprise information identifying at least one portion of at least one needed resource allocation to be configured at the at least one target apparatus for the at least one data transfer. In some embodiments, the at least one other scheduling grant for continuing the at least one data transfer may comprise information identifying at least one new resource allocation to be configured at the at least one target apparatus for continuing the at least one data transfer. In some embodiments, the at least one other scheduling grant for continuing the at least one data transfer may comprise information identifying at least one RLC PDU segment associated with the at least one data transfer and at least one quantity of repetitions associated with the at least one data transfer associated with the at least one source apparatus. In some embodiments, the at least one other scheduling grant for continuing the at least one data transfer at the at least one target apparatus may comprise at least one scheduling grant that estimates at least one remaining needed sample to decode the at least one data transfer.

As described above, Fig. 4 is provided as an example. Other examples are possible according to some embodiments.

Fig. 5 illustrates an example flow diagram of a method, according to some embodiments. For example, Fig. 5 shows example operations of a source apparatus (e.g., apparatus 10). Some of the operations illustrated in Fig. 5 may be similar to some operations shown in, and described with respect to, Figs. 1-3b.

In an embodiment, the method may include, at 500, receiving at least one scheduling request from at least one user equipment (UE). In an embodiment, the method may include, at 502, determining that at least one scheduling request for at least one data transfer cannot be completed. The at least one scheduling request may be associated with at least one needed resource allocation and at least one available serving time for at least one scheduling grant and the at least one data transfer. In an embodiment, the method may include, at 504, transmitting, to at least one target apparatus based on determining that the at least one data transfer cannot be completed, information related to at least one status of the at least one data transfer for continuing the at least one data transfer at the at least one target apparatus. The information related to the at least one status may comprise at least one user equipment (UE) identifier associated with the at least one data transfer.

In some embodiments, the information related to the at least one status may further comprise at least one of: at least one network apparatus UE X2 application protocol (X2AP) identifier, UE context information, at least one cell radio network temporary identifier (C-RNTI), at least one short message authentication code for integrity (MAC-I), or at least one failure cell physical cell identity (PCI) to identify the at least one UE. In some embodiments, the information related to the at least one status may include a quantity of layer 1 (L1) transmissions, buffered data and expected pending data associated with the at least one data transfer, original radio resources allocated for the at least one data transfer as part of the at least one needed resource allocation, or at least one original BSR or scheduling grant associated with the at least one data transfer. In some embodiments, the information related to the at least one status may include at least one status of at least one uplink PDCP SDU, at least one uplink count value, at least one uplink RLC context, or data forwarding of at least one buffered and ongoing RLC PDU or at least one soft bit that was being transmitted prior to at least one transmission disruption.

In some embodiments, the method may include triggering collaboration with the at least one target apparatus based on determining that the at least one data transfer cannot be completed. In some embodiments, the method may include transmitting, to the at least one target apparatus, at least one request to collaborate on the at least one data transfer and information related to the at least one data transfer based on triggering the collaboration. In some embodiments, the method may include receiving at least one response associated with the at least one request to collaborate. In some embodiments, the at least one response may indicate that the at least one target apparatus is to collaborate with the source apparatus.

In some embodiments, the method may include exchanging, with the at least one target apparatus, information indicating at least one portion of the at least one needed resource allocation to be configured at the source apparatus and at least one other portion of the at least one needed resource allocation to be configured at the at least one target apparatus. In some embodiments, the method may include transmitting, to the at least one UE, information identifying the at least one portion of the at least one needed resource allocation or the at least one other portion of the at least one needed resource allocation. In some embodiments, the method may include determining, based on determining that the at least one data transfer cannot be completed, at least one portion of the at least one needed resource allocation to be configured at the source apparatus.

In some embodiments, the method may include transmitting, to the at least one UE, the at least one scheduling grant that identifies the at least one portion of the at least one needed resource allocation. In some embodiments, the method may include determining, based on determining that the at least one data transfer cannot be completed, the at least one scheduling grant associated with the source apparatus for the at least one data transfer. In some embodiments, the at least one scheduling grant may be based on the at least one available service time that can be used for the at least one data transfer. In some embodiments, the at least one scheduling grant may comprise information identifying at least one RLC PDU segment associated with the at least one data transfer and at least one quantity of repetitions to the source apparatus associated with the at least one data transfer. In some embodiments, the method may include transmitting the at least one scheduling grant to the at least one UE.

In some embodiments, the method may include receiving data associated with the at least one data transfer, wherein the receiving is based on the at least one RLC PDU segment and the at least one quantity of repetitions. In some embodiments, the at least one data transfer may comprise at least one uplink data transfer. In some embodiments, the method may include receiving multiple uplink repetitions of the at least one uplink data transfer based on transmitting the at least one scheduling grant. In some embodiments, the method may include merging the multiple uplink repetitions of the at least one uplink data transfer based on receiving the multiple uplink repetitions. In some embodiments, the method may include determining, based on determining that the data transfer cannot be completed, the at least one scheduling grant associated with decoding the at least one data transfer. In some embodiments, the method may include transmitting the at least one scheduling grant to the at least one UE. In some embodiments, the method may include receiving data associated with the at least one data transfer.

As described above, Fig. 5 is provided as an example. Other examples are possible according to some embodiments.

Fig. 6 illustrates an example flow diagram of a method, according to some embodiments. For example, Fig. 6 shows example operations of a target apparatus (e.g., apparatus 10). Some of the operations illustrated in Fig. 6 may be similar to some operations shown in, and described with respect to, Figs. 1-3b.

In an embodiment, the method may include, at 600, receiving, from at least one source apparatus, information related to at least one status of at least one data transfer for continuing the at least one data transfer at the target apparatus. The information related to the at least one status may comprise at least one UE identifier associated with the at least one data transfer. In an embodiment, the method may include, at 602, transmitting, to the at least one UE, at least one scheduling grant for continuing the at least one data transfer at the target apparatus. The at least one scheduling grant may be based on the information related to the at least one status. In some embodiments, the at least one source apparatus may send the scheduling grant for continuing the at least one data transfer at the target apparatus to the at least one UE on behalf of the target apparatus. In an embodiment, the method may include, at 604, receiving, from the at least one user equipment (UE), at least one portion of data associated with the at least one data transfer.

In some embodiments, the information related to the at least one status may further comprise at least one of: at least one network apparatus UE X2AP identifier, UE context information, at least one C-RNTI, at least one short MAC-I, or at least one failure cell PCI to identify the at least one UE. In some embodiments, the information related to the at least one status may include a quantity of L1 transmissions, buffered data and expected pending data associated with the at least one data transfer, original radio resources allocated for the at least one data transfer, at least one original BSR or scheduling request associated with the at least one data transfer. In some embodiments, the information related to the at least one status may include at least one status of at least one uplink PDCP SDU, at least one uplink count value, at least one uplink RLC context, or data forwarding of at least one buffered and ongoing RLC PDU or at least one soft bit that was being transmitted prior to at least one transmission disruption.

In some embodiments, the method may include receiving, from the at least one source apparatus, at least one request to collaborate on the at least one data transfer and information related to the at least one data transfer. In some embodiments, the method may include transmitting at least one response associated with the at least one request to collaborate indicating that the target apparatus is to collaborate with the at least one source apparatus. In some embodiments, the method may include exchanging, with the at least one source apparatus, information indicating at least one portion of at least one needed resource allocation to be configured at the at least one source apparatus and at least one other portion of the at least one needed network resource allocation to be configured at the target apparatus. In some embodiments, the method may include transmitting, to the at least one UE to continue the at least one data transfer at the target apparatus, information identifying the at least one other portion of the at least one needed resource allocation based on receiving the information related to the at least one status.

In some embodiments, the method may include transmitting, to the at least one UE, information identifying at least one new resource allocation to be configured at the target apparatus associated with continuing the at least one data transfer at the target apparatus. In some embodiments, the method may include determining the at least one scheduling grant for continuing the at least one data transfer at the target apparatus based on receiving the information related to the at least one status. In some embodiments, the at least one scheduling grant may comprise information identifying at least one RLC PDU segment associated with the at least one data transfer and at least one quantity of repetitions to the target apparatus associated with the at least one data transfer. In some embodiments, the method may include transmitting the at least one scheduling grant to the at least one UE based on determining the at least one scheduling grant.

In some embodiments, the at least one data transfer may comprise at least one uplink data transfer. In some embodiments, the method may include receiving multiple uplink repetitions of the at least one uplink data transfer based on transmitting the at least one scheduling grant. In some embodiments, the method may include merging the multiple uplink repetitions of the at least one uplink data transfer based on receiving the multiple uplink repetitions. In some embodiments, the method may include determining the at least one scheduling grant for continuing the at least one data transfer at the target apparatus based on receiving the information related to the at least one status. In some embodiments, the at least one scheduling grant may estimate at least one remaining needed sample to decode the at least one data transfer.

In some embodiments, the method may include transmitting the at least one scheduling grant to the at least one UE based on determining the at least one scheduling grant. In some embodiments, the at least one data transfer may comprise at least one uplink data transfer. In some embodiments, the method may include receiving multiple uplink repetitions of the at least one uplink data transfer based on transmitting the at least one scheduling grant. In some embodiments, the method may include merging the multiple repetitions of the at least one uplink data transfer with one or more other parts of the at least one status transferred from the at least one source apparatus based on receiving the multiple uplink repetitions.

As described above, Fig. 6 is provided as an example. Other examples are possible according to some embodiments.

Fig. 7a illustrates an example of an apparatus 10 according to an embodiment. In an embodiment, apparatus 10 may be a node, host, or server in a communications network or serving such a network. For example, apparatus 10 may be a network apparatus (e.g., a source apparatus or a target apparatus), network node, satellite, base station, a Node B, an evolved Node B (eNB), 5G Node B or access point, next generation Node B (NG-NB or gNB), and/or a WLAN access point, associated with a radio access network, such as a LTE network, 5G or NR. In example embodiments, apparatus 10 may be an eNB in LTE or gNB in 5G.

It should be understood that, in some example embodiments, apparatus 10 may be comprised of an edge cloud server as a distributed computing system where the server and the radio node may be stand-alone apparatuses communicating with each other via a radio path or via a wired connection, or they may be located in a same entity communicating via a wired connection. For instance, in certain example embodiments where apparatus 10 represents a gNB, it may be configured in a central unit (CU) and distributed unit (DU) architecture that divides the gNB functionality. In such an architecture, the CU may be a logical node that includes gNB functions such as transfer of user data, mobility control, radio access network sharing, positioning, and/or session management, etc. The CU may control the operation of DU(s) over a front-haul interface. The DU may be a logical node that includes a subset of the gNB functions, depending on the functional split option. It should be noted that one of ordinary skill in the art would understand that apparatus 10 may include components or features not shown in Fig. 7a.

As illustrated in the example of Fig. 7a, apparatus 10 may include a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 12 is shown in Fig. 7a, multiple processors may be utilized according to other embodiments. For example, it should be understood that, in certain embodiments, apparatus 10 may include two or more processors that may form a multiprocessor system (e.g., in this case processor 12 may represent a multiprocessor) that may support multiprocessing. In certain embodiments, the multiprocessor system may be tightly coupled or loosely coupled (e.g., to form a computer cluster).

Processor 12 may perform functions associated with the operation of apparatus 10, which may include, for example, precoding of antenna gain/phase parameters, encoding and decoding of individual bits forming a communication message, formatting of information, and overall control of the apparatus 10, including processes related to management of communication resources.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media. The instructions stored in memory 14 may include program instructions or computer program code that, when executed by processor 12, enable the apparatus 10 to perform tasks as described herein.

In an embodiment, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10.

In some embodiments, apparatus 10 may also include or be coupled to one or more antennas 15 for transmitting and receiving signals and/or data to and from apparatus 10. Apparatus 10 may further include or be coupled to a transceiver 18 configured to transmit and receive information. The transceiver 18 may include, for example, a plurality of radio interfaces that may be coupled to the antenna(s) 15. The radio interfaces may correspond to a plurality of radio access technologies including one or more of GSM, NB-IoT, LTE, 5G, WLAN, Bluetooth, BT-LE, NFC, radio frequency identifier (RFID), ultrawideband (UWB), MulteFire, and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (for example, via an uplink).

As such, transceiver 18 may be configured to modulate information on to a carrier waveform for transmission by the antenna(s) 15 and demodulate information received via the antenna(s) 15 for further processing by other elements of apparatus 10. In other embodiments, transceiver 18 may be capable of transmitting and receiving signals or data directly. Additionally or alternatively, in some embodiments, apparatus 10 may include an input and/or output device (I/O device).

In an embodiment, memory 14 may store software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

According to some embodiments, processor 12 and memory 14 may be included in or may form a part of processing circuitry or control circuitry. In addition, in some embodiments, transceiver 18 may be included in or may form a part of transceiver circuitry.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to case an apparatus (e.g., apparatus 10) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

As introduced above, in certain embodiments, apparatus 10 may be a network node or RAN node, such as a base station, access point, Node B, eNB, gNB, WLAN access point, or the like.

According to certain embodiments, apparatus 10 may be controlled by memory 14 and processor 12 to perform the functions associated with any of the embodiments described herein, such as some operations of flow or signaling diagrams illustrated in Figs. 1-6.

For instance, in one embodiment, apparatus 10 may be controlled by memory 14 and processor 12 to determine that at least one scheduling request for at least one data transfer cannot be completed. The at least one scheduling request may be associated with at least one needed resource allocation and at least one available serving time for at least one scheduling grant and the at least one data transfer. In one embodiment, apparatus 10 may be controlled by memory 14 and processor 12 to transmit, to at least one target apparatus based on determining that the at least one data transfer cannot be completed, information related to at least one status of the at least one data transfer for continuing the at least one data transfer at the at least one target apparatus. The information related to the at least one status may comprise at least one user equipment (UE) identifier associated with the at least one data transfer.

In one embodiment, apparatus 10 may be controlled by memory 14 and processor 12 to receive, from at least one source apparatus, information related to at least one status of at least one data transfer for continuing the at least one data transfer at the target apparatus. The information related to the at least one status may comprise at least one UE identifier associated with the at least one data transfer. In one embodiment, apparatus 10 may be controlled by memory 14 and processor 12 to transmit, to the at least one UE, at least one scheduling grant for continuing the at least one data transfer at the target apparatus. The at least one scheduling grant may be based on the information related to the at least one status.

Fig. 7b illustrates an example of an apparatus 20 according to another embodiment. In an embodiment, apparatus 20 may be a node or element in a communications network or associated with such a network, such as a UE, mobile equipment (ME), mobile station, mobile device, stationary device, IoT device, or other device. As described herein, a UE may alternatively be referred to as, for example, a mobile station, mobile equipment, mobile unit, mobile device, user device, subscriber station, wireless terminal, tablet, smart phone, IoT device, sensor or NB-IoT device, or the like. As one example, apparatus 20 may be implemented in, for instance, a wireless handheld device, a wireless plug-in accessory, or the like.

In some example embodiments, apparatus 20 may include one or more processors, one or more computer-readable storage medium (for example, memory, storage, or the like), one or more radio access components (for example, a modem, a transceiver, or the like), and/or a user interface. In some embodiments, apparatus 20 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 20 may include components or features not shown in Fig. 7b.

As illustrated in the example of Fig. 7b, apparatus 20 may include or be coupled to a processor 22 for processing information and executing instructions or operations. Processor 22 may be any type of general or specific purpose processor. In fact, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in Fig. 7b, multiple processors may be utilized according to other embodiments. For example, it should be understood that, in certain embodiments, apparatus 20 may include two or more processors that may form a multiprocessor system (e.g., in this case processor 22 may represent a multiprocessor) that may support multiprocessing. In certain embodiments, the multiprocessor system may be tightly coupled or loosely coupled (e.g., to form a computer cluster).

Processor 22 may perform functions associated with the operation of apparatus 20 including, as some examples, precoding of antenna gain/phase parameters, encoding and decoding of individual bits forming a communication message, formatting of information, and overall control of the apparatus 20, including processes related to management of communication resources.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can be comprised of any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein.

In an embodiment, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20.

In some embodiments, apparatus 20 may also include or be coupled to one or more antennas 25 for receiving a downlink signal and for transmitting via an uplink from apparatus 20. Apparatus 20 may further include a transceiver 28 configured to transmit and receive information. The transceiver 28 may also include a radio interface (e.g., a modem) coupled to the antenna 25. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an uplink.

For instance, transceiver 28 may be configured to modulate information on to a carrier waveform for transmission by the antenna(s) 25 and demodulate information received via the antenna(s) 25 for further processing by other elements of apparatus 20. In other embodiments, transceiver 28 may be capable of transmitting and receiving signals or data directly. Additionally or alternatively, in some embodiments, apparatus 20 may include an input and/or output device (I/O device). In certain embodiments, apparatus 20 may further include a user interface, such as a graphical user interface or touchscreen.

In an embodiment, memory 24 stores software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software. According to an example embodiment, apparatus 20 may optionally be configured to communicate with apparatus 10 via a wireless or wired communications link 70 according to any radio access technology, such as NR.

According to some embodiments, processor 22 and memory 24 may be included in or may form a part of processing circuitry or control circuitry. In addition, in some embodiments, transceiver 28 may be included in or may form a part of transceiving circuitry.

As discussed above, according to some embodiments, apparatus 20 may be a UE, mobile device, mobile station, ME, IoT device and/or NB-IoT device, for example. According to certain embodiments, apparatus 20 may be controlled by memory 24 and processor 22 to perform the functions associated with example embodiments described herein. For example, in some embodiments, apparatus 20 may be configured to perform one or more of the processes depicted in any of the flow charts or signaling diagrams described herein, such as those illustrated in Figs. 1-6.

For instance, in one embodiment, apparatus 20 may be controlled by memory 24 and processor 22 to receive at least one scheduling grant for at least one data transfer with at least one source apparatus and at least one indication that the at least one data transfer is to be continued at at least one target apparatus. At least one buffer of data and at least one scheduling configuration related to the at least one data transfer may be maintained in the event of at least one transmission disruption. In one embodiment, apparatus 20 may be controlled by memory 24 and processor 22 to receive at least one other scheduling grant for continuing the at least one data transfer at the at least one target apparatus.

Therefore, certain example embodiments provide several technological improvements, enhancements, and/or advantages over existing technological processes. For example, one benefit of some example embodiments may be completion of data transfers in a resource and power efficient manner (e.g., via elimination of the impact of restarting the data transmission every time a transmission disruption and cell reselection takes place by enabling continued data transfer after such an event). Another advantage of certain embodiments may include facilitation of data transfers in extreme coverage cases (e.g., where the transmission time may be longer than the largest possible satellite coverage time) by allowing the repetitions to extend to the next satellite coverage time. Another advantage of certain embodiments may be reduction in the control overhead (e.g., because the conventional segmentation may introduce RLC/MAC layer headers per (small) segment) by permitting the use of a larger segment (e.g., resulting in lower overhead for the entire message transfer). Another advantage of certain embodiments may include facilitating, via the transmission status transfer, faster completion of a data transfer because the target cell may provide a scheduling grant to the UE, allocating resources for all or some of the missing data, when the UE becomes RRC connected (rather than there being a delay in the scheduling grant). Thus, the 4-step BSR procedure can be reduced to a single step (the scheduling grant of the actual user data), which conserves computing/processing resources and/or network resources. Accordingly, the use of some example embodiments results in improved functioning of communications networks and their nodes and, therefore constitute an improvement at least to the technological field of data transfers between a cell and a UE, among others.

In some example embodiments, the functionality of any of the methods, processes, signaling diagrams, algorithms or flow charts described herein may be implemented by software and/or computer program code or portions of code stored in memory or other computer readable or tangible media, and executed by a processor.

In some example embodiments, an apparatus may be included or be associated with at least one software application, module, unit or entity configured as arithmetic operation(s), or as a program or portions of it (including an added or updated software routine), executed by at least one operation processor. Programs, also called program products or computer programs, including software routines, applets and macros, may be stored in any apparatus-readable data storage medium and may include program instructions to perform particular tasks.

A computer program product may include one or more computer-executable components which, when the program is run, are configured to carry out some example embodiments. The one or more computer-executable components may be at least one software code or portions of code. Modifications and configurations required for implementing functionality of an example embodiment may be performed as routine(s), which may be implemented as added or updated software routine(s). In one example, software routine(s) may be downloaded into the apparatus.

As an example, software or a computer program code or portions of code may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and/or software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (e.g., apparatus 10 or apparatus 20), for example through the use of an application specific integrated circuit (ASIC), a programmable gate array (PGA), a field programmable gate array (FPGA), or any other combination of hardware and software. In yet another example embodiment, the functionality may be implemented as a signal, such as a non-tangible means that can be carried by an electromagnetic signal downloaded from the Internet or other network.

According to an example embodiment, an apparatus, such as a node, device, or a corresponding component, may be configured as circuitry, a computer or a microprocessor, such as single-chip computer element, or as a chipset, which may include at least a memory for providing storage capacity used for arithmetic operation(s) and/or an operation processor for executing the arithmetic operation(s).

Example embodiments described herein apply equally to both singular and plural implementations, regardless of whether singular or plural language is used in connection with describing certain embodiments. For example, an embodiment that describes operations of a single network apparatus equally applies to embodiments that include multiple instances of the network apparatus, and vice versa. In addition, although certain embodiments were described in the context of uplink transmissions, certain embodiments apply equally to downlink transmission, and vice versa. Further, although some embodiments may have been described in the context of a NTN satellite operating as a base station, other deployment scenarios are possible. For example, a base station may be located on Earth and the NTN satellite may operate as a relay node.

One having ordinary skill in the art will readily understand that the example embodiments as discussed above may be practiced with operations in a different order, and/or with hardware elements in configurations which are different than those which are disclosed. Therefore, although some embodiments have been described based upon these examples preferred embodiments, it would be apparent to those of skill in the art that certain modifications, variations, and alternative constructions would be apparent, while remaining within the spirit and scope of example embodiments.

According to a first embodiment, a method may include receiving at least one scheduling grant for at least one data transfer with at least one source apparatus and at least one indication that the at least one data transfer is to be continued at at least one target apparatus. At least one buffer of data and at least one scheduling configuration related to the at least one data transfer may be maintained in the event of at least one transmission disruption. The method may include receiving at least one other scheduling grant for continuing the at least one data transfer at the at least one target apparatus.

In a variant, the at least one scheduling grant for the at least one data transfer may comprise information identifying at least one portion of at least one needed resource allocation to be configured at the at least one source apparatus for the at least one data transfer or at least one other portion of the at least one needed resource allocation to be configured at the at least one target apparatus. In a variant, the at least one scheduling grant for the at least one data transfer may comprise information that identifies at least one portion of at least one needed resource allocation to be configured at the at least one source apparatus for the at least one data transfer, or wherein the at least one other scheduling grant for continuing the at least one data transfer at the at least one target apparatus comprises information identifying at least one new resource allocation to be configured at the at least one target apparatus for continuing the at least one data transfer at the at least one target apparatus.

In a variant, the at least one scheduling grant may comprise information identifying at least one RLC PDU segment associated with the at least one data transfer and at least one quantity of repetitions to the at least one source apparatus associated with the at least one data transfer. In a variant, the method may include transmitting data associated with the at least one data transfer to the at least one source apparatus. In a variant, the transmitting may be based on the at least one RLC PDU segment and the at least one quantity of repetitions. In a variant, the at least one scheduling grant for the at least one data transfer may comprise at least one scheduling grant associated with the at least one source apparatus to successfully decode the at least one data transfer. In a variant, the method may include transmitting data associated with the at least one data transfer to the at least one source apparatus.

In a variant, the at least one other scheduling grant for continuing the at least one data transfer may comprise information identifying at least one portion of at least one needed resource allocation to be configured at the at least one target apparatus for the at least one data transfer. In a variant, the at least one other scheduling grant for continuing the at least one data transfer may comprise information identifying at least one new resource allocation to be configured at the at least one target apparatus for continuing the at least one data transfer. In a variant, the at least one other scheduling grant for continuing the at least one data transfer may comprise information identifying at least one RLC PDU segment associated with the at least one data transfer and at least one quantity of repetitions associated with the at least one data transfer associated with the at least one source apparatus. In a variant, the at least one other scheduling grant for continuing the at least one data transfer at the at least one target apparatus may comprise at least one scheduling grant that estimates at least one remaining needed sample to decode the at least one data transfer.

According to a second embodiment, a method may include determining that at least one scheduling request for at least one data transfer cannot be completed. The at least one scheduling request may be associated with at least one needed resource allocation and at least one available serving time for at least one scheduling grant and the at least one data transfer. The method may include transmitting, to at least one target apparatus based on determining that the at least one data transfer cannot be completed, information related to at least one status of the at least one data transfer for continuing the at least one data transfer at the at least one target apparatus. The information related to the at least one status may comprise at least one UE identifier associated with the at least one data transfer.

In a variant, the information related to the at least one status may further comprise at least one of: at least one network apparatus UE X2AP identifier, UE context information, at least one C-RNTI, at least one short MAC-I, or at least one failure cell PCI to identify the at least one UE. In a variant, the information related to the at least one status may include a quantity of L1 transmissions, buffered data and expected pending data associated with the at least one data transfer, original radio resources allocated for the at least one data transfer as part of the at least one needed resource allocation, or at least one original BSR or scheduling request associated with the at least one data transfer. In a variant, the information related to the at least one status may include at least one status of at least one uplink PDCP SDU, at least one uplink count value, at least one uplink RLC context, or data forwarding of at least one buffered and ongoing RLC PDU or at least one soft bit that was being transmitted prior to at least one transmission disruption.

In a variant, the method may include triggering collaboration with the at least one target apparatus based on determining that the at least one data transfer cannot be completed. In a variant, the method may include transmitting, to the at least one target apparatus, at least one request to collaborate on the at least one data transfer and information related to the at least one data transfer based on triggering the collaboration. In a variant, the method may include receiving at least one response associated with the at least one request to collaborate. In a variant, the at least one response may indicate that the at least one target apparatus is to collaborate with the source apparatus.

In a variant, the method may include exchanging, with the at least one target apparatus, information indicating at least one portion of the at least one needed resource allocation to be configured at the source apparatus and at least one other portion of the at least one needed resource allocation to be configured at the at least one target apparatus. In a variant, the method may include transmitting, to the at least one UE, information identifying the at least one portion of the at least one needed resource allocation or the at least one other portion of the at least one needed resource allocation. In a variant, the method may include determining, based on determining that the at least one data transfer cannot be completed, at least one portion of the at least one needed resource allocation to be configured at the source apparatus.

In a variant, the method may include transmitting, to the at least one UE, the at least one scheduling grant that identifies the at least one portion of the at least one needed resource allocation. In a variant, the method may include determining, based on determining that the at least one data transfer cannot be completed, the at least one scheduling grant associated with the source apparatus for the at least one data transfer. In a variant, the at least one scheduling grant may be based on the at least one available service time that can be used for the at least one data transfer. In a variant, the at least one scheduling grant may comprise information identifying at least one RLC PDU segment associated with the at least one data transfer and at least one quantity of repetitions to the source apparatus associated with the at least one data transfer. In a variant, the method may include transmitting the at least one scheduling grant to the at least one UE.

In a variant, the method may include receiving data associated with the at least one data transfer, wherein the receiving is based on the at least one RLC PDU segment and the at least one quantity of repetitions. In a variant, the at least one data transfer may comprise at least one uplink data transfer. In a variant, the method may include receiving multiple uplink repetitions of the at least one uplink data transfer based on transmitting the at least one scheduling grant. In a variant, the method may include merging the multiple uplink repetitions of the at least one uplink data transfer based on receiving the multiple uplink repetitions. In a variant, the method may include determining, based on determining that the data transfer cannot be completed, the at least one scheduling grant associated with decoding the at least one data transfer. In a variant, the method may include transmitting the at least one scheduling grant to the at least one UE. In a variant, the method may include receiving data associated with the at least one data transfer.

According to a third embodiment, the method may include receiving, from at least one source apparatus, information related to at least one status of at least one data transfer for continuing the at least one data transfer at the target apparatus. The information related to the at least one status may comprise at least one UE identifier associated with the at least one data transfer. The method may include receiving, from the at least one user equipment (UE), the at least one data transfer based on at least one scheduling grant for continuing the at least one data transfer at the at least one source apparatus, wherein the at least one scheduling grant is based on the information related to the at least one status.

In a variant, the method may include transmitting, to the at least one UE, the at least one scheduling grant for continuing the at least one data transfer at the target apparatus. In a variant, the information related to the at least one status may include at least one of: at least one network apparatus UE X2AP identifier, UE context information, at least one C-RNTI, at least one short MAC-I, or at least one failure cell PCI to identify the at least one UE. In a variant, the information related to the at least one status may include a quantity of L1 transmissions, buffered data and expected pending data associated with the at least one data transfer, original radio resources allocated for the at least one data transfer, at least one original BSR or scheduling request associated with the at least one data transfer. In a variant, the information related to the at least one status may include at least one status of at least one uplink PDCP SDU, at least one uplink count value, at least one uplink RLC context, or data forwarding of at least one buffered and ongoing RLC PDU or at least one soft bit that was being transmitted prior to at least one transmission disruption.

In a variant, the method may include receiving, from the at least one source apparatus, at least one request to collaborate on the at least one data transfer and information related to the at least one data transfer. In a variant, the method may include transmitting at least one response associated with the at least one request to collaborate indicating that the target apparatus is to collaborate with the at least one source apparatus. In a variant, the method may include exchanging, with the at least one source apparatus, information indicating at least one portion of at least one needed resource allocation to be configured at the at least one source apparatus and at least one other portion of the at least one needed network resource allocation to be configured at the target apparatus. In a variant, the method may include transmitting, to the at least one UE to continue the at least one data transfer at the target apparatus, information identifying the at least one other portion of the at least one needed resource allocation based on receiving the information related to the at least one status.

In a variant, the method may include transmitting, to the at least one UE, information identifying at least one new resource allocation to be configured at the target apparatus associated with continuing the at least one data transfer at the target apparatus. In a variant, the method may include determining the at least one scheduling grant for continuing the at least one data transfer at the target apparatus based on receiving the information related to the at least one status. In a variant, the at least one scheduling grant may comprise information identifying at least one RLC PDU segment associated with the at least one data transfer and at least one quantity of repetitions to the target apparatus associated with the at least one data transfer. In a variant, the method may include transmitting the at least one scheduling grant to the at least one UE based on determining the at least one scheduling grant.

In a variant, the at least one data transfer may comprise at least one uplink data transfer. In a variant, the method may include receiving multiple uplink repetitions of the at least one uplink data transfer based on transmitting the at least one scheduling grant. In a variant, the method may include merging the multiple uplink repetitions of the at least one uplink data transfer based on receiving the multiple uplink repetitions. In a variant, the method may include determining the at least one scheduling grant for continuing the at least one data transfer at the target apparatus based on receiving the information related to the at least one status. In a variant, the at least one scheduling grant may estimate at least one remaining needed sample to decode the at least one data transfer.

In a variant, the method may include transmitting the at least one scheduling grant to the at least one UE based on determining the at least one scheduling grant. In a variant, the at least one data transfer may comprise at least one uplink data transfer. In a variant, the method may include receiving multiple uplink repetitions of the at least one uplink data transfer based on transmitting the at least one scheduling grant. In a variant, the method may include merging the multiple repetitions of the at least one uplink data transfer with one or more other parts of the at least one status transferred from the at least one source apparatus based on receiving the multiple uplink repetitions.

A fourth embodiment may be directed to an apparatus including at least one processor and at least one memory comprising computer program code. The at least one memory and computer program code may be configured, with the at least one processor, to cause the apparatus at least to perform the method according to the first embodiment, the second embodiment, or the third embodiment, or any of the variants discussed above.

A fifth embodiment may be directed to an apparatus that may include circuitry configured to perform the method according to the first embodiment, the second embodiment, or the third embodiment, or any of the variants discussed above.

A sixth embodiment may be directed to an apparatus that may include means for performing the method according to the first embodiment, the second embodiment, or the third embodiment, or any of the variants discussed above.

A seventh embodiment may be directed to a computer readable medium comprising program instructions stored thereon for performing at least the method according to the first embodiment, the second embodiment, or the third embodiment, or any of the variants discussed above.

An eighth embodiment may be directed to a computer program product encoding instructions for performing at least the method according to the first embodiment, the second embodiment, or the third embodiment, or any of the variants discussed above.

PARTIAL GLOSSARY

| | |
|---|---|
| AM | Acknowledged Mode |
| BSR | Buffer Status Report |
| CIoT | Cellular Internet of Things |
| EDT | Early Data Transmission |
| eMTC | enhanced Machine-Type Communications |
| EPS | Evolved Packet System |
| LEO | Low-Earth Orbit |
| MME | Mobility Management Entity |
| NAS | Non-Access Stratum |
| NB-IoT | Narrowband Internet of Things |
| NPDSCH | Narrowband Physical Downlink Shared Channel |
| NPUSCH | Narrowband Physical Uplink Shared Channel |
| NPRACH | Narrowband Physical Random Access Channel |
| NR | New Radio |
| NTN | Non-Terrestrial Networks |
| PDCP | Packet Data Convergence Protocol |
| UE | User Equipment |
| UM | Unacknowledged Mode |
| RLC | Radio Link Control |
| RLF | Radio Link Failure |
| RRC | Radio Resource Control |
| SDU | Service Data Unit |
| SR | Scheduling Request |
| TM | Transparent Mode |

## Claims

**1.** A source apparatus, comprising:

means for determining that at least one scheduling request for at least one data transfer cannot be completed, wherein the at least one scheduling request is associated with at least one needed resource allocation and at least one available serving time for at least one scheduling grant and the at least one data transfer; and
means for transmitting, to at least one target apparatus based on determining that the at least one data transfer cannot be completed, information related to at least one status of the at least one data transfer for continuing the at least one data transfer at the at least one target apparatus, wherein the information related to the at least one status comprises at least one user equipment (UE) identifier associated with the at least one data transfer.

**2.** The source apparatus according to claim 1, wherein the information related to the at least one status further comprises at least one of:

at least one network apparatus user equipment (UE) X2 application protocol (X2AP) identifier, user equipment (UE) context information, at least one cell radio network temporary identifier (C-RNTI), at least one short message authentication code for integrity (MAC-I), or at least one failure cell physical cell identity (PCI) to identify the at least one user equipment (UE),
a quantity of layer 1 (LI) transmissions,
buffered data and expected pending data associated with the at least one data transfer,
original radio resources allocated for the at least one data transfer as part of the at least one needed resource allocation,
at least one original buffer status report (BSR) or scheduling request associated with the at least one data transfer,
at least one status of at least one uplink packet data convergence protocol (PDCP) service data unit (SDU),
at least one uplink count value,
at least one uplink radio link control (RLC) context, or
data forwarding of at least one buffered and ongoing radio link control (RLC) protocol data unit (PDU) or at least one soft bit that was being transmitted prior to at least one transmission disruption.

**3.** The source apparatus according to anyone of claims 1-2, further comprising:
means for exchanging, with the at least one target apparatus, information indicating at least one portion of the at least one needed resource allocation to be configured at the source apparatus and at least one other portion of the at least one needed resource allocation to be configured at the at least one target apparatus.

**4.** The source apparatus according to claim 1-3, further comprising:
means for transmitting, to the at least one user equipment (UE), information identifying the at least one portion of the at least one needed resource allocation or the at least one other portion of the at least one needed resource allocation.

**5.** The source apparatus according to anyone of claims 1-4, further comprising:
means for determining, based on determining that the at least one data transfer cannot be completed, at least one portion of the at least one needed resource allocation to be configured at the source apparatus.

**6.** The source apparatus according to anyone of claims 1-5, further comprising:
means for transmitting, to the at least one user equipment (UE), the at least one scheduling grant that identifies the at least one portion of the at least one needed resource allocation.

**7.** The source apparatus according to claim 6, further comprising:
means for determining, based on determining that the at least one data transfer cannot be completed, the at least one scheduling grant associated with the source apparatus for the at least one data transfer, wherein the at least one scheduling grant is based on the at least one available service time that can be used for the at least one data transfer, wherein the at least one scheduling grant comprises information identifying at least one radio link control (RLC) protocol data unit (PDU) segment associated with the at least one data transfer and at least one quantity of repetitions to the source apparatus associated with the at least one data transfer.

**8.** A target apparatus, comprising:

means for receiving, from at least one source apparatus, information related to at least one status of at least one data transfer for continuing the at least one data transfer at the target apparatus, wherein the information related to the at least one status comprises at least one user equipment (UE) identifier associated with the at least one data transfer; and
means for receiving, from the at least one user equipment (UE), the at least one data transfer based on at least one scheduling grant for continuing the at least one data transfer at the at least one target apparatus, wherein the at least one scheduling grant is based on the information related to the at least one status.

**9.** The target apparatus according to claim 8, wherein the information related to the at least one status further comprises at least one of:

at least one network apparatus user equipment (UE) X2 application protocol (X2AP) identifier, user equipment (UE) context information, at least one cell radio network temporary identifier (C-RNTI), at least one short message authentication code for integrity (MAC-I), or at least one failure cell physical cell identity (PCI) to identify the at least one user equipment (UE),
a quantity of layer 1 (LI) transmissions,
buffered data and expected pending data associated with the at least one data transfer,
original radio resources allocated for the at least one data transfer,
at least one original buffer status report (BSR) or scheduling request associated with the at least one data transfer,
at least one status of at least one uplink packet data convergence protocol (PDCP) service data unit (SDU),
at least one uplink count value,
at least one uplink radio link control (RLC) context, or
data forwarding of at least one buffered and ongoing radio link control (RLC) protocol data unit (PDU) or at least one soft bit that was being transmitted prior to at least one transmission disruption.

**10.** The target apparatus according to anyone of claims 8-9, further comprising:

means for receiving, from the at least one source apparatus, at least one request to collaborate on the at least one data transfer and information related to the at least one data transfer; and
means for transmitting at least one response associated with the at least one request to collaborate indicating that the target apparatus is to collaborate with the at least one source apparatus.

**11.** The target apparatus according to anyone of claims 8 - 10, further comprising:
means for exchanging, with the at least one source apparatus, information indicating at least one portion of at least one needed resource allocation to be configured at the at least one source apparatus and at least one other portion of the at least one needed network resource allocation to be configured at the target apparatus.

**12.** The target apparatus according to anyone of claims 8 - 11, further comprising:
means for transmitting, to the at least one user equipment (UE) to continue the at least one data transfer at the target apparatus, information identifying the at least one other portion of the at least one needed resource allocation based on receiving the information related to the at least one status.

**13.** The target apparatus according to anyone of claims 8 - 12, further comprising:
means for transmitting, to the at least one user equipment (UE), information identifying at least one new resource allocation to be configured at the target apparatus associated with continuing the at least one data transfer at the target apparatus.

**14.** A method, comprising:

determining, by a source apparatus, that at least one scheduling request for at least one data transfer cannot be completed, wherein the at least one scheduling request is associated with at least one needed resource allocation and at least one available serving time for at least one scheduling grant and the at least one data transfer; and
transmitting, to at least one target apparatus based on determining that the at least one data transfer cannot be completed, information related to at least one status of the at least one data transfer for continuing the at least one data transfer at the at least one target apparatus, wherein the information related to the at least one status comprises at least one user equipment (UE) identifier associated with the at least one data transfer.

**15.** A method, comprising:

receiving, by a target apparatus from at least one source apparatus, information related to at least one status of at least one data transfer for continuing the at least one data transfer at the target apparatus, wherein the information related to the at least one status comprises at least one user equipment (UE) identifier associated with the at least one data transfer; and
receiving, from the at least one user equipment (UE), the at least one data transfer based on at least one scheduling grant for continuing the at least one data transfer at the at least one target apparatus, wherein the at least one scheduling grant is based on the information related to the at least one status.

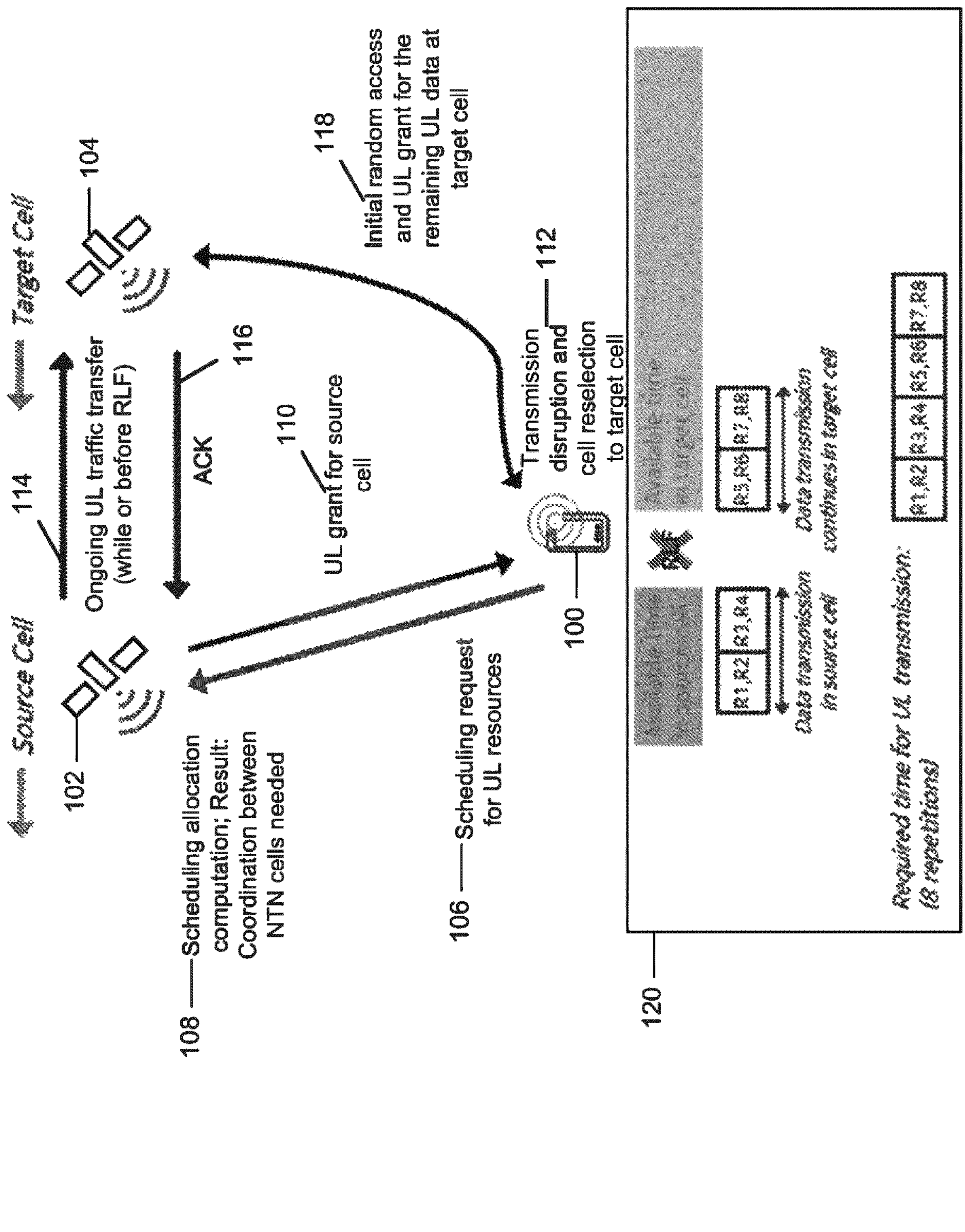
Source Cell
Target Cell
102
104
114
Ongoing UL traffic transfer (while or before RLF)
ACK
116
110
UL grant for source cell
118
Initial random access and UL grant for the remaining UL data at target cell
112
Transmission disruption and cell reselection to target cell
100
106
Scheduling request for UL resources
108
Scheduling allocation computation; Result: Coordination between NTN cells needed
120
Available time in source cell
Available time in target cell
R1,R2
R3,R4
R5,R6
R7,R8
Data transmission in source cell
Data transmission continues in target cell
Required time for UL transmission: (8 repetitions)
R1,R2
R3,R4
R5,R6
R7,R8

Fig. 1a

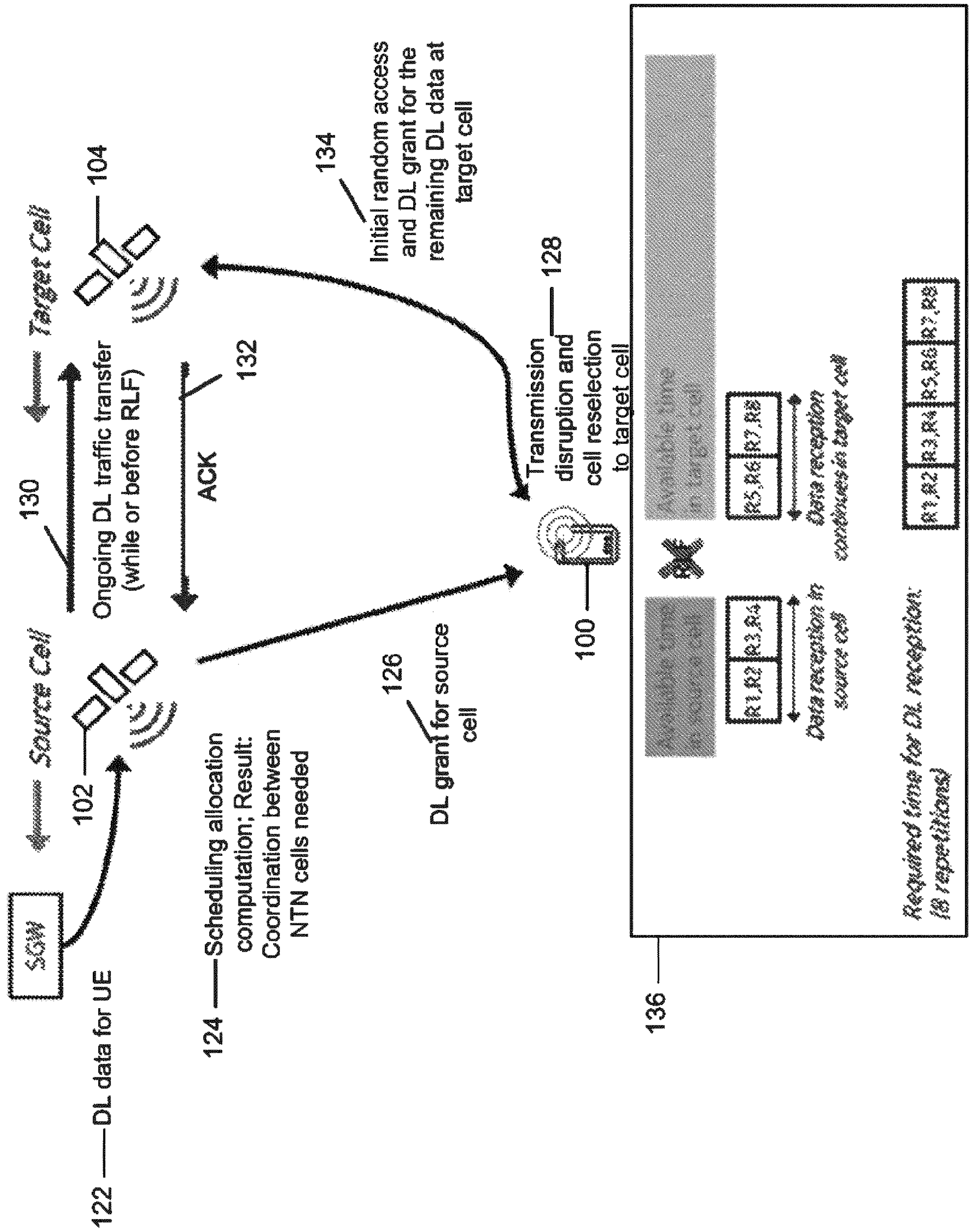
122
DL data for UE
SGW
Source Cell
102
Target Cell
104
124
Scheduling allocation computation; Result: Coordination between NTN cells needed
130
Ongoing DL traffic transfer (while or before RLF)
ACK
132
126
DL grant for source cell
100
128
Transmission disruption and cell reselection to target cell
134
Initial random access and DL grant for the remaining DL data at target cell
136
Available time in source cell
Available time in target cell
R1,R2
R3,R4
R5,R6
R7,R8
Data reception in source cell
Data reception continues in target cell
Required time for DL reception (8 repetitions)

Fig. 1b

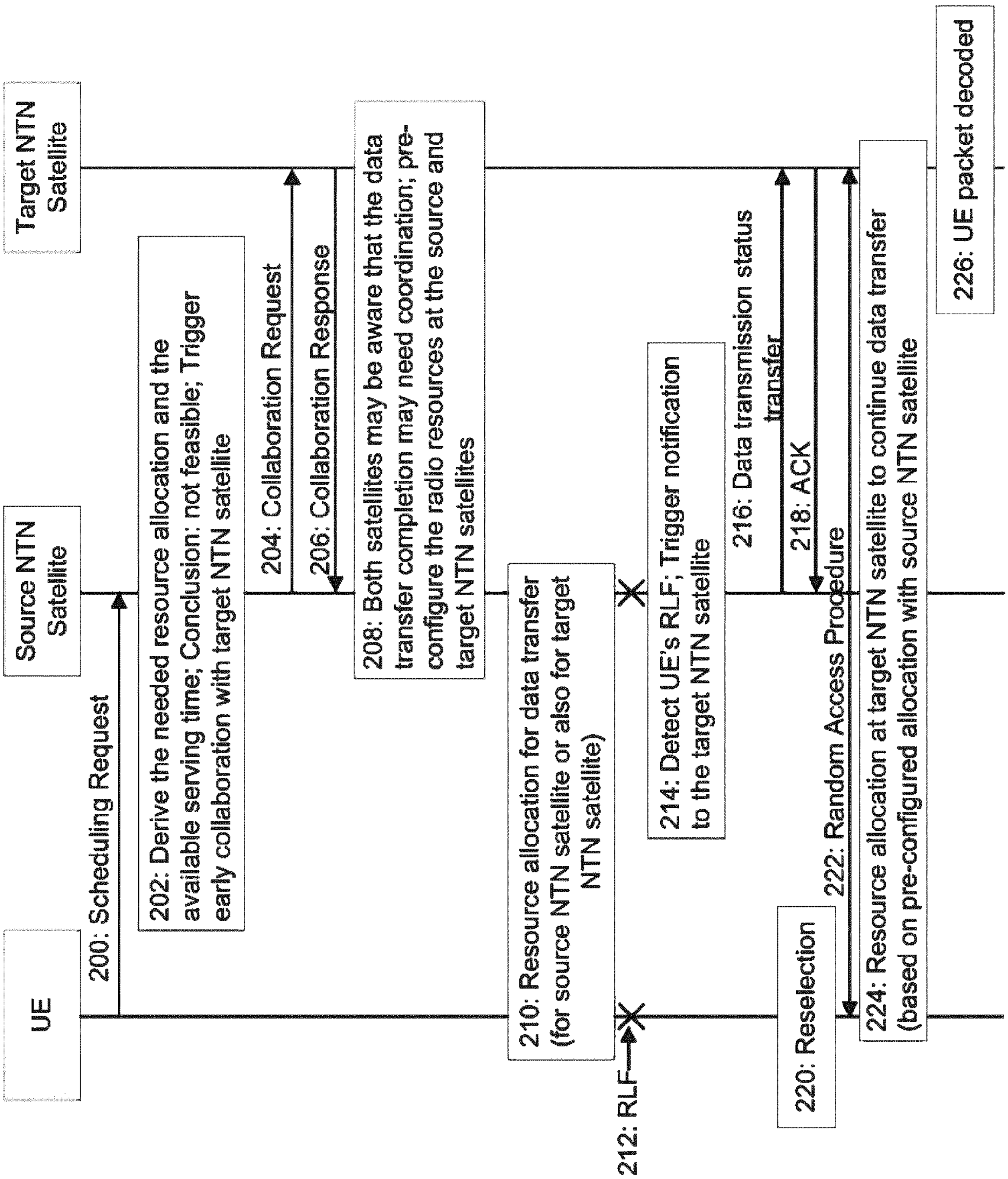
UE
Source NTN Satellite
Target NTN Satellite
200: Scheduling Request
202: Derive the needed resource allocation and the available serving time; Conclusion: not feasible; Trigger early collaboration with target NTN satellite
204: Collaboration Request
206: Collaboration Response
208: Both satellites may be aware that the data transfer completion may need coordination; pre-configure the radio resources at the source and target NTN satellites
210: Resource allocation for data transfer (for source NTN satellite or also for target NTN satellite)
212: RLF
214: Detect UE's RLF; Trigger notification to the target NTN satellite
216: Data transmission status transfer
218: ACK
220: Reselection
222: Random Access Procedure
224: Resource allocation at target NTN satellite to continue data transfer (based on pre-configured allocation with source NTN satellite
226: UE packet decoded

Fig. 2a

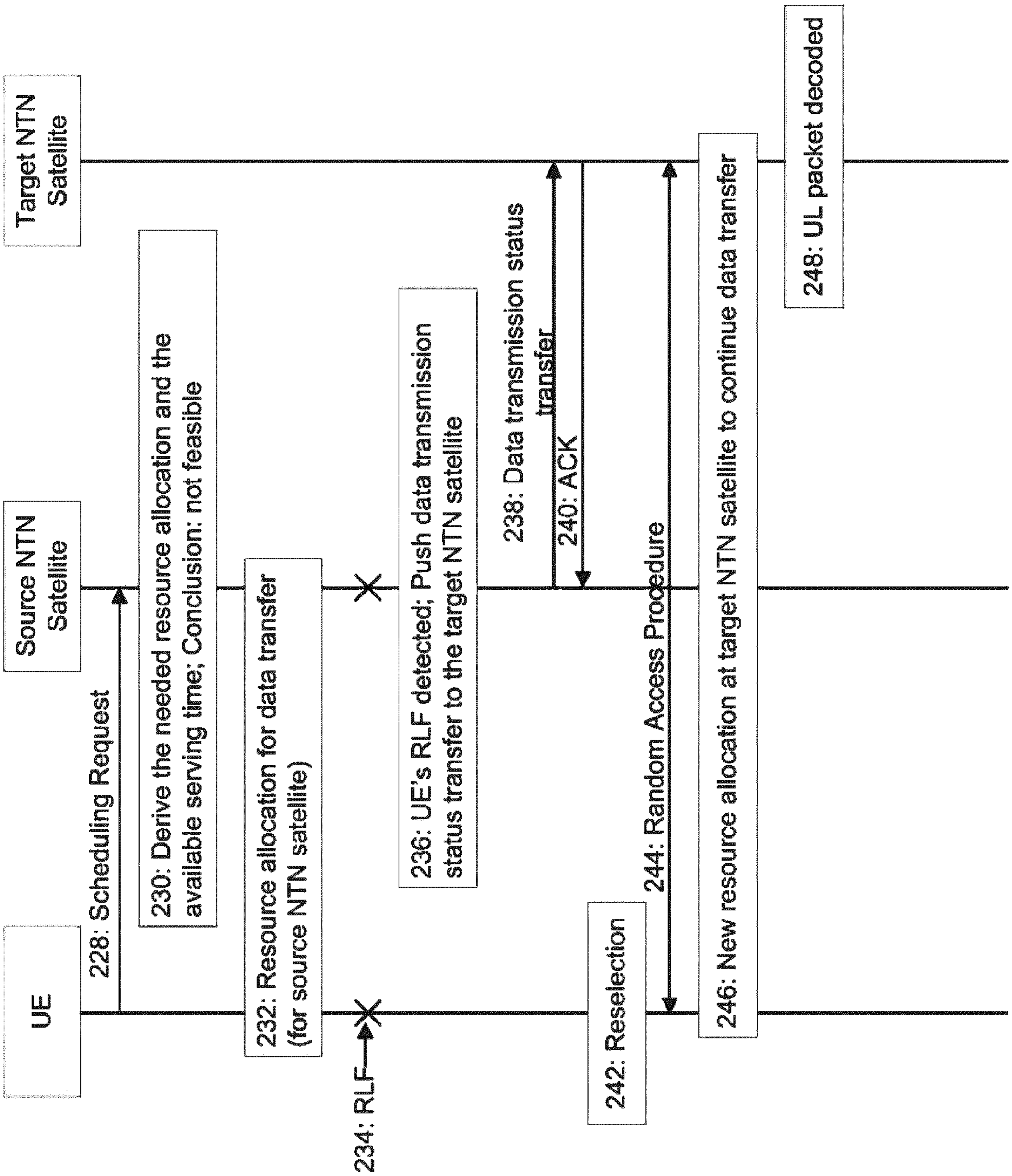
UE
Source NTN Satellite
Target NTN Satellite
228: Scheduling Request
230: Derive the needed resource allocation and the available serving time; Conclusion: not feasible
232: Resource allocation for data transfer (for source NTN satellite)
234: RLF
236: UE's RLF detected; Push data transmission status transfer to the target NTN satellite
238: Data transmission status transfer
240: ACK
242: Reselection
244: Random Access Procedure
246: New resource allocation at target NTN satellite to continue data transfer
248: UL packet decoded

Fig. 2b

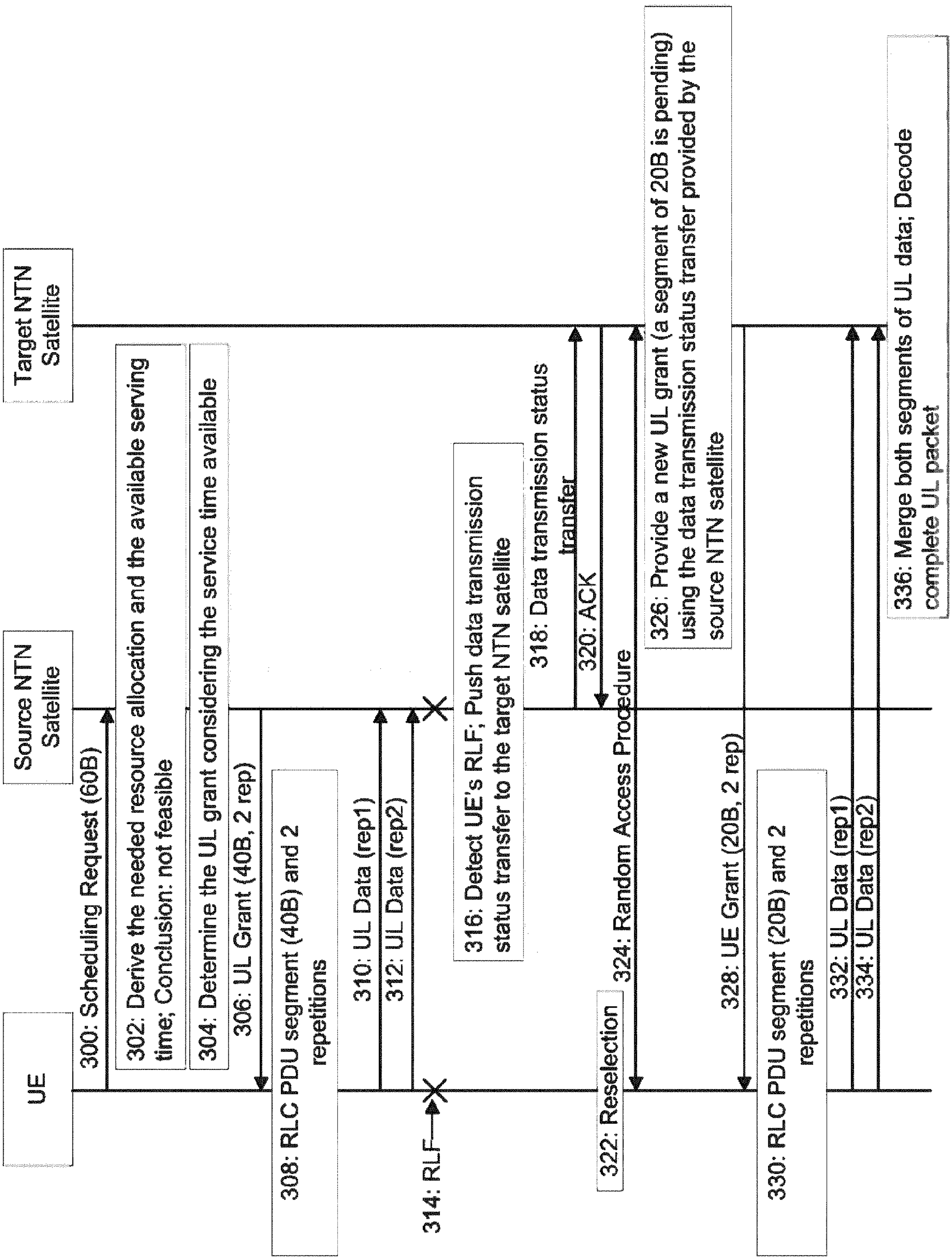

UE
Source NTN Satellite
Target NTN Satellite
300: Scheduling Request (60B)
302: Derive the needed resource allocation and the available serving time; Conclusion: not feasible
304: Determine the UL grant considering the service time available
306: UL Grant (40B, 2 rep)
308: RLC PDU segment (40B) and 2 repetitions
310: UL Data (rep1)
312: UL Data (rep2)
314: RLF
316: Detect UE's RLF; Push data transmission status transfer to the target NTN satellite
318: Data transmission status transfer
320: ACK
322: Reselection
324: Random Access Procedure
326: Provide a new UL grant (a segment of 20B is pending) using the data transmission status transfer provided by the source NTN satellite
328: UE Grant (20B, 2 rep)
330: RLC PDU segment (20B) and 2 repetitions
332: UL Data (rep1)
334: UL Data (rep2)
336: Merge both segments of UL data; Decode complete UL packet


Fig. 3a

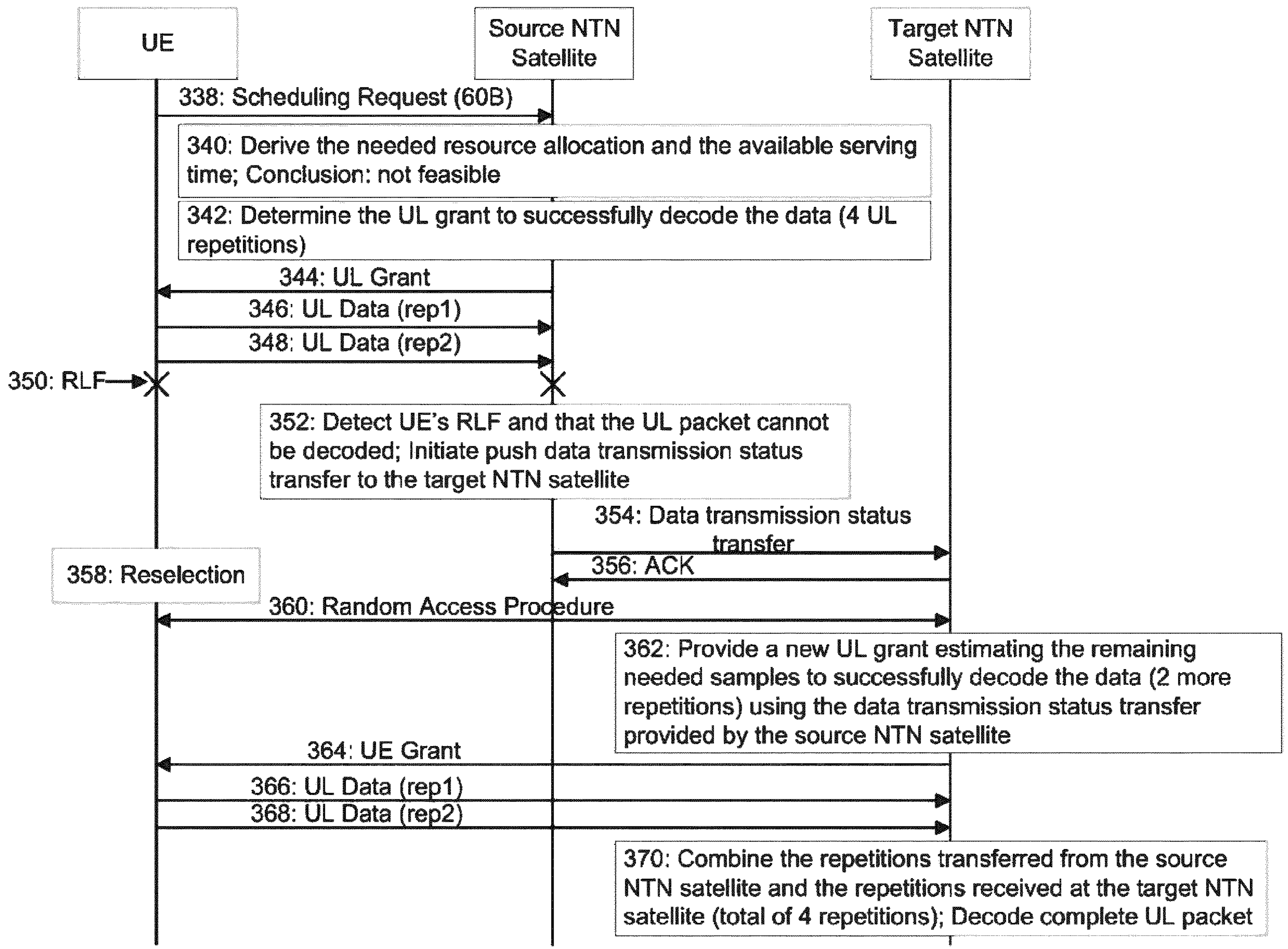
UE
Source NTN Satellite
Target NTN Satellite
338: Scheduling Request (60B)
340: Derive the needed resource allocation and the available serving time; Conclusion: not feasible
342: Determine the UL grant to successfully decode the data (4 UL repetitions)
344: UL Grant
346: UL Data (rep1)
348: UL Data (rep2)
350: RLF
352: Detect UE's RLF and that the UL packet cannot be decoded; Initiate push data transmission status transfer to the target NTN satellite
354: Data transmission status transfer
356: ACK
358: Reselection
360: Random Access Procedure
362: Provide a new UL grant estimating the remaining needed samples to successfully decode the data (2 more repetitions) using the data transmission status transfer provided by the source NTN satellite
364: UE Grant
366: UL Data (rep1)
368: UL Data (rep2)
370: Combine the repetitions transferred from the source NTN satellite and the repetitions received at the target NTN satellite (total of 4 repetitions); Decode complete UL packet

Fig. 3b

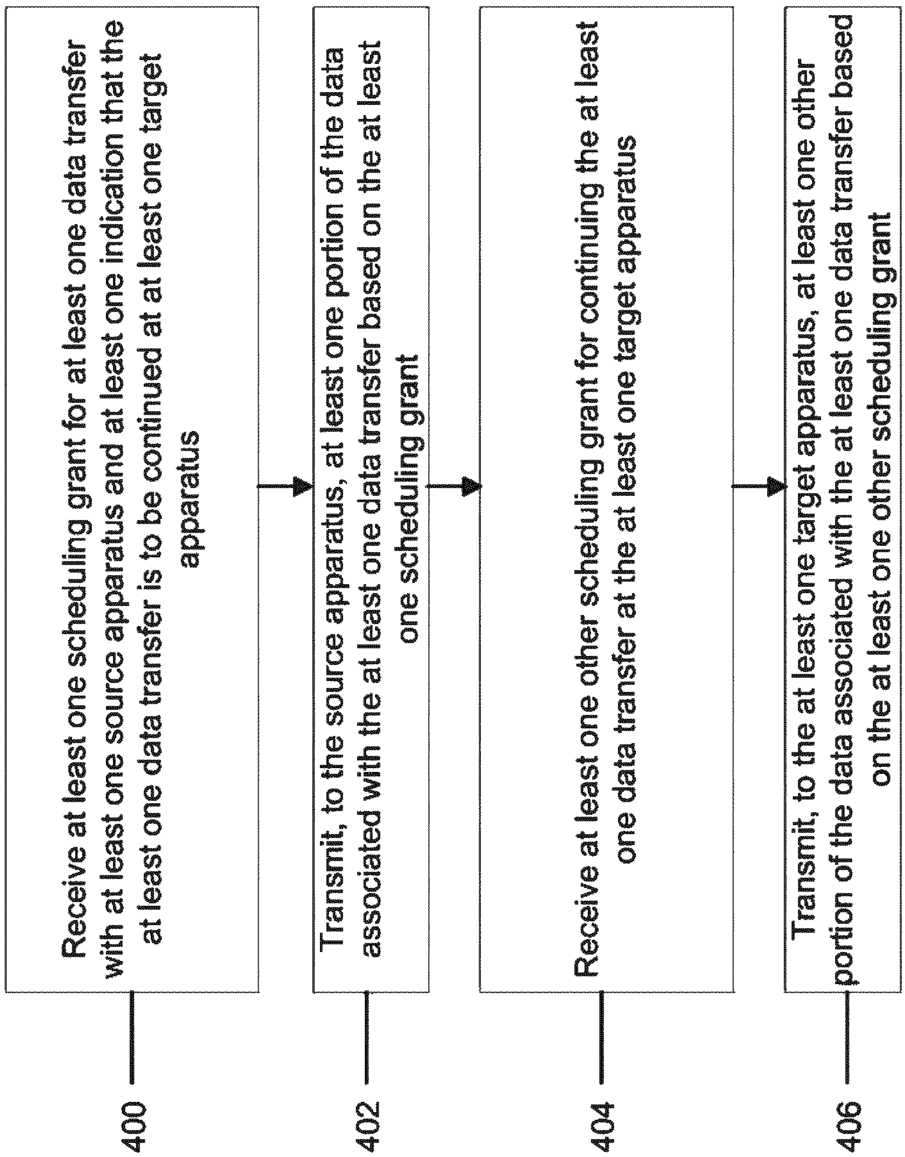
400
Receive at least one scheduling grant for at least one data transfer with at least one source apparatus and at least one indication that the at least one data transfer is to be continued at at least one target apparatus
402
Transmit, to the source apparatus, at least one portion of the data associated with the at least one data transfer based on the at least one scheduling grant
404
Receive at least one other scheduling grant for continuing the at least one data transfer at the at least one target apparatus
406
Transmit, to the at least one target apparatus, at least one other portion of the data associated with the at least one data transfer based on the at least one other scheduling grant

Fig. 4

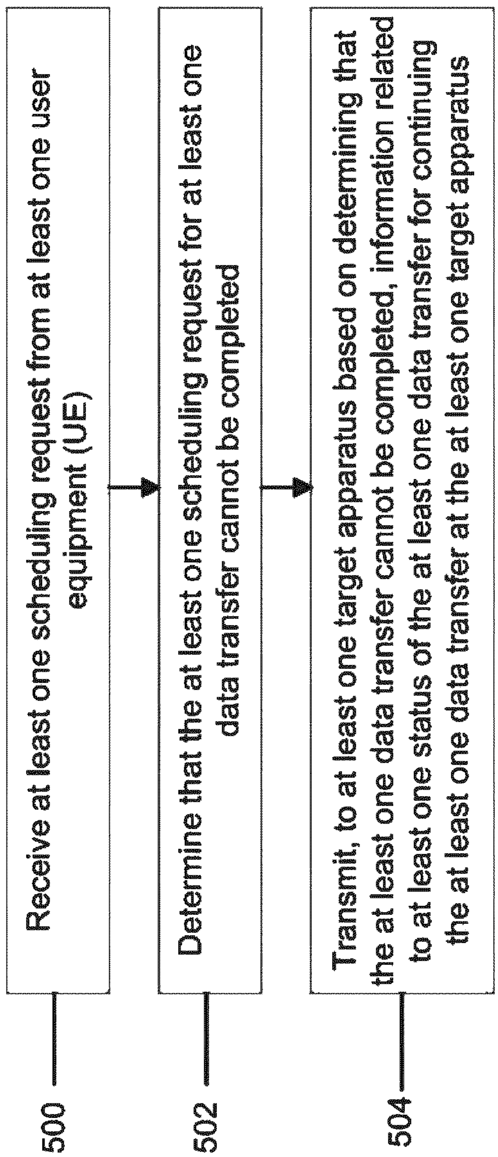
500
Receive at least one scheduling request from at least one user equipment (UE)
502
Determine that the at least one scheduling request for at least one data transfer cannot be completed
504
Transmit, to at least one target apparatus based on determining that the at least one data transfer cannot be completed, information related to at least one status of the at least one data transfer for continuing the at least one data transfer at the at least one target apparatus

Fig. 5

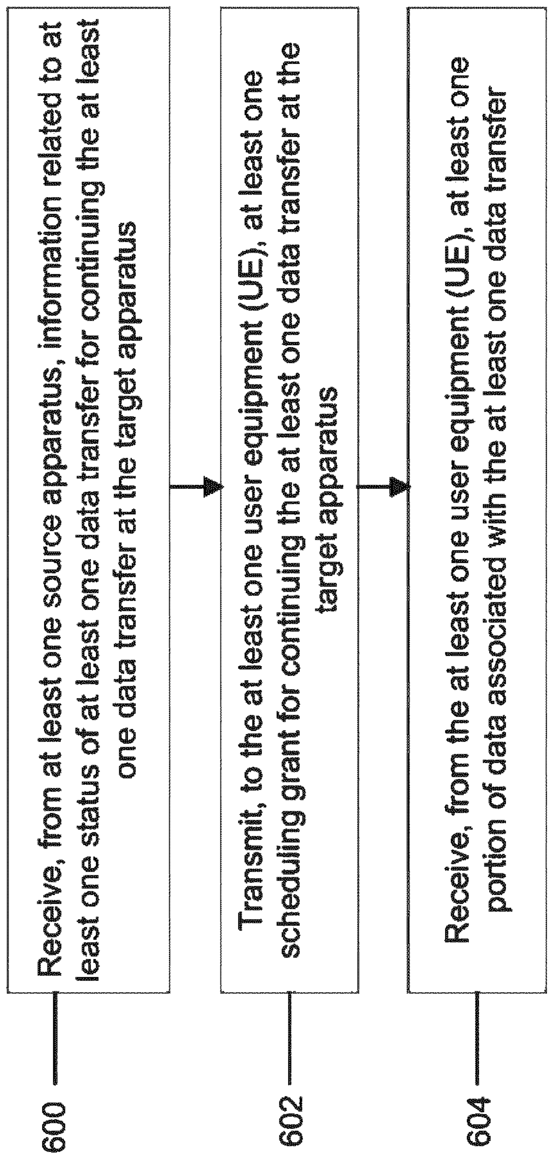
600
Receive, from at least one source apparatus, information related to at least one status of at least one data transfer for continuing the at least one data transfer at the target apparatus
602
Transmit, to the at least one user equipment (UE), at least one scheduling grant for continuing the at least one data transfer at the target apparatus
604
Receive, from the at least one user equipment (UE), at least one portion of data associated with the at least one data transfer

Fig. 6

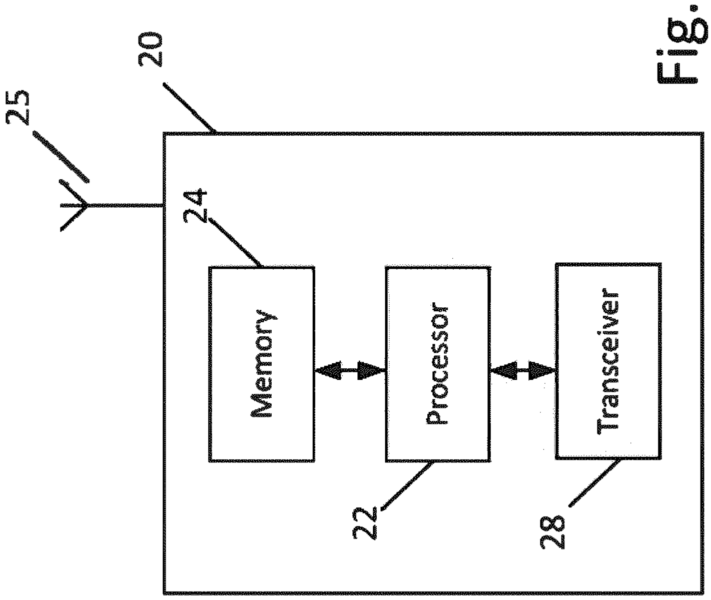

20
25
24
Memory
Processor
Transceiver
22
28


Fig. 7b

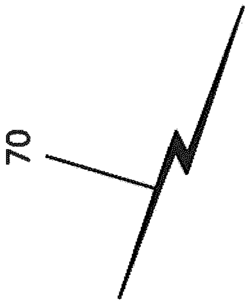

70


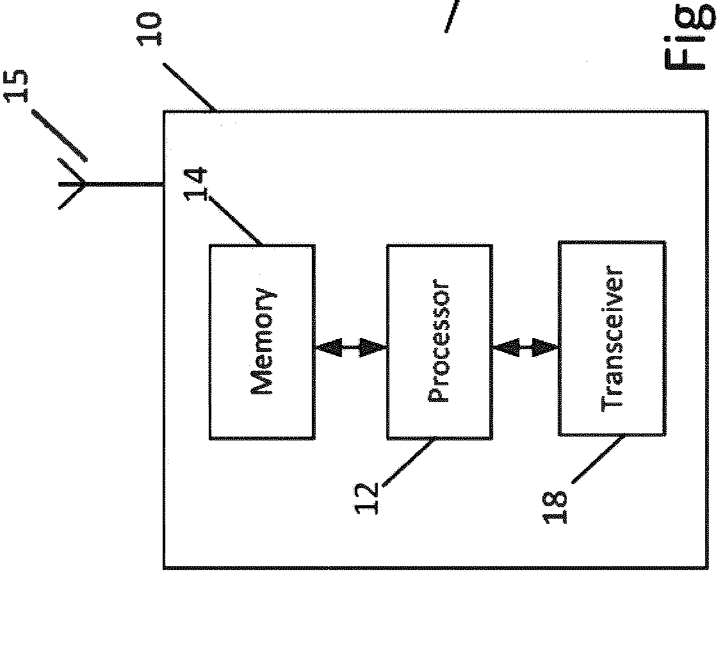

10
15
14
Memory
Processor
Transceiver
12
18


Fig. 7a

Europäisches Patentamt
European Patent Office
Office européen des brevets

# EUROPEAN SEARCH REPORT

Application Number
EP 21 17 2183

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | WO 2016/175495 A1 (LG ELECTRONICS INC [KR]) 3 November 2016 (2016-11-03)<br>* paragraph [0103] - paragraph [0121] *<br>* paragraph [0127] - paragraph [0145] *<br>* claims 1-14 *<br>* figures 11,12 *<br>----- | 1,8,14, 15<br>2-7,9-13 | INV.<br>H04W72/12<br>H04W28/02 |
| A | WO 2018/175764 A1 (INTEL IP CORP [US]) 27 September 2018 (2018-09-27)<br>* page 16, line 11 - page 17, line 21 *<br>* claims 1-21 *<br>----- | 1-15 | |
| A | EP 3 179 766 A1 (INNOVATIVE TECH LAB CO LTD [KR]) 14 June 2017 (2017-06-14)<br>* paragraph [0049] - paragraph [0058] *<br>* claims 1-20 *<br>----- | 1-15 | |

TECHNICAL FIELDS SEARCHED (IPC)

H04W
H04L

The present search report has been drawn up for all claims

| Place of search | Date of completion of the search | Examiner |
|---|---|---|
| The Hague | 20 October 2021 | Chassatte, Rémy |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 17 2183

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2021

| Patent document cited in search report | Publication date | Patent family member(s) | Publication date |
| --- | --- | --- | --- |
| WO 2016175495 A1 | 03-11-2016 | EP 3289818 A1 | 07-03-2018 |
| | | US 2018092126 A1 | 29-03-2018 |
| | | WO 2016175495 A1 | 03-11-2016 |
| WO 2018175764 A1 | 27-09-2018 | CN 110463236 A | 15-11-2019 |
| | | EP 3603133 A1 | 05-02-2020 |
| | | US 2019387383 A1 | 19-12-2019 |
| | | WO 2018175764 A1 | 27-09-2018 |
| EP 3179766 A1 | 14-06-2017 | CN 106664595 A | 10-05-2017 |
| | | CN 112040455 A | 04-12-2020 |
| | | CN 112040456 A | 04-12-2020 |
| | | EP 3179766 A1 | 14-06-2017 |
| | | EP 3651542 A1 | 13-05-2020 |
| | | US 2016044737 A1 | 11-02-2016 |
| | | US 2019191478 A1 | 20-06-2019 |
| | | US 2020229260 A1 | 16-07-2020 |
| | | US 2021204347 A1 | 01-07-2021 |
| | | WO 2016021960 A1 | 11-02-2016 |

EPO FORM P0459

For more details about this annex : see Official Journal of the European Patent Office, No. 12/82